# EUROPEAN PATENT APPLICATION

(11) **EP 4 328 191 A1**
(43) Date of publication of application: **28.02.2024**
(21) Application number: 23805843.2
(22) Date of filing: 13.04.2023
(51) Int. Cl.: C02F 1/42

(54) **FLIP COVER ASSEMBLY**

(30) Priority: 30.05.2022 CN 202210602653; 30.05.2022 CN 202210605819
(71) Applicant: Foshan Midea Chungho Water Purification Equipment Co., Ltd., Foshan, Guangdong 528311 (CN); Midea Group Co., Ltd., Foshan, Guangdong 528311 (CN)
(72) Inventor: HU, Chenghuan, Foshan, Guangdong 528311 (CN); HAO, Zhipeng, Foshan, Guangdong 528311 (CN); ZHANG, Bo, Foshan, Guangdong 528311 (CN); QING, Pu, Foshan, Guangdong 528311 (CN); GONG, Ziming, Foshan, Guangdong 528311 (CN); HUANG, Rensheng, Foshan, Guangdong 528311 (CN); ZHENG, Yuedong, Foshan, Guangdong 528311 (CN); LIAO, Yumin, Foshan, Guangdong 528311 (CN)
(74) Representative: Whitlock, Holly Elizabeth Ann
(86) International application number: PCT/CN2023/088207
(87) International publication number: WO 2023/231611

(57) **Abstract**

A flip cover assembly includes: a cover body and a first crank arm. A first end of the first crank arm is connected to an end of the cover body, and a second end of the first crank arm is used for rotatably connecting to a middle frame assembly of a water softener. The cover is flippable relative to the middle frame assembly through the first crank arm, and a flip angle of the cover body relative to the middle frame assembly is greater than 90°.

## Description

### CROSS-REFERENCE TO RELATED APPLICATIONS

The present disclosure is based on and claims priority to Chinese Patent Applications No. 202210605819.5 and No. 202210602653.1, filed on May 30, 2022, which are hereby incorporated by reference in their entireties.

### TECHNICAL FIELD

The present disclosure relates to the field of water softeners, and in particular, to a flip cover assembly, a top cover device, a water softener, a top cover assembly, and a water softening device.

### BACKGROUND

A traditional water softener mainly includes a salt box, a resin tank mounted in the salt box, and a control device. When the water softener is working, functional ions of a resin unit in the resin tank exchange with calcium ions and magnesium ions in water, which reduces a concentration of calcium ions and magnesium ions in the water, which reduces hardness of water. When the resin unit in the resin tank adsorbs fully calcium ions and magnesium ions, the resin unit needs to be regenerated with special brine dissolved in the salt box in order to repeatedly use the resin unit in the resin tank.

In practical applications, the design of a top cover of the traditional water softener is not practical. An operator can only add salt into the water softener by removing the top cover. This operation is cumbersome and it is inconvenient to add salt into the salt box.

### SUMMARY

The present disclosure aims to solve at least one of the problems in the related art. Therefore, the present disclosure provides a flip cover assembly that can flip a cover body of the flip cover assembly at a large angle, so as to facilitate adding salt into a water softener.

The present disclosure further provides a top cover device.

The present disclosure further provides a water softener.

A flip cover assembly according to the present disclosure includes:
a cover body; and
a first crank arm, where a first end of the first crank arm is connected to an end of the cover body, and a second end of the first crank arm is rotatably connected to a middle frame assembly of a water softener,
where the cover body is flippable relative to the middle frame assembly through the first crank arm, and a flip angle of the cover body relative to the middle frame assembly is greater than 90°.

According to the flip cover assembly of the embodiment of the present disclosure, the cover body is flipped relative to the middle frame assembly through the first crank arm, and the cover body is flipped relative to the middle frame assembly at a large angle greater than 90°, and an upper side of the middle frame assembly has a sufficiently large open space to facilitate an operator to add salt into the water softener.

According to an embodiment of the present disclosure, the first crank arm includes a first long-arm segment and a first short-arm segment, where the first long-arm segment is arc-shaped, the first short-arm segment is linear, a first end of the first long-arm segment is connected to an end of the cover body, a second end of the first long-arm segment is connected to a first end of the first short-arm segment, and a second end of the first short-arm segment is rotatably connected to the middle frame assembly,
where a distance between the second end of the first short-arm segment and the first end of the first long-arm segment is shorter than a distance between the first end of the first short-arm segment and the first end of the first long-arm segment.

According to an embodiment of the present disclosure, the flip cover assembly further includes: a first stop portion connected to the first crank arm, and the first stop portion abuts against or is separated from the middle frame assembly.

According to an embodiment of the present disclosure, the first stop portion is provided at an outer side of the first crank arm.

According to an embodiment of the present disclosure, the first crank arm is provided with a plurality of mounting positions arranged in sequence along an extension direction of the first crank arm, where the first stop portion is detachably connected to any one of the plurality of mounting positions.

According to an embodiment of the present disclosure, the flip cover assembly further includes: a first damping shaft, with an end connected to the second end of the first crank arm, and another end connected to the middle frame assembly.

Atop cover device according to the present disclosure includes:
a middle frame assembly provided with a first through opening; and
a flip cover assembly of any of the above embodiments, where the second end of the first crank arm is rotatably connected to the middle frame assembly,
where the cover body is flippable relative to the middle frame assembly between a first position at which the first through opening is closed and a second position at which the first through opening is opened.

According to an embodiment of the present disclosure, the middle frame assembly is provided with an abut portion, when the cover body is in the first position, the first stop portion on the first crank arm is separated from the abut portion, and when the cover body is in the second position, the first stop portion on the first crank arm abuts against the abut portion.

According to an embodiment of the present disclosure, the top cover device further includes: a display cover assembly detachably connected to the middle frame assembly and configured to close or open a second through opening, where the middle frame assembly is provided with the second through opening.

According to an embodiment of the present disclosure, the middle frame assembly includes a middle frame and a middle frame decorative ring, where the middle frame decorative ring sleeves outside the middle frame.

According to an embodiment of the present disclosure, a plurality of buckle structures are provided between the middle frame and the middle frame decorative ring, where the plurality of buckle structures are arranged sequentially along a circumferential direction of the middle frame; and
the buckle structure includes a buckle head and a buckle slot, where the buckle head is buckled in the buckle slot, one of the buckle head and the buckle slot is provided at the middle frame, and another one of the buckle head and the buckle slot is provided at the middle frame decorative ring.

According to an embodiment of the present disclosure, an outer side of the middle frame is provided with a first guide surface, an inner side of the middle frame decorative ring is provided with a second guide surface, and the first guide surface is matched with the second guide surface.

A water softener according to the present disclosure includes:
a box body, where a receiving cavity is formed inside the box body, and a box opening is formed at a top of the box body communicating with the receiving cavity; and
a top cover device of any of the above embodiments, where the middle frame assembly is detachably mounted on the box opening.

According to an embodiment of the present disclosure, the water softener further includes: a resin tank provided in the receiving cavity,
both the first through opening and the second through opening on the middle frame assembly are connected to the receiving cavity respectively, and the second through opening is arranged opposite to the resin tank.

Additional aspects and advantages of the present disclosure will be set forth in part in the description which follows and, in part, will be apparent from the description, or may be learned by practice of the presented disclosure.

In order to solve a problem of uneven gaps between a display screen cover body and a middle frame in a water softening device, the present disclosure further provides a top cover assembly and a water softening device.

Atop cover assembly according to the present disclosure includes:
a first frame body, provided with a first opening and a first limit portion; and
a first top cover component, connected to the first frame body and provided with a second limit portion, where the first top cover component is switchable between an open state and a closed state,
where in the closed state, the first top cover component covers the first opening, and the first limit portion is limitedly matched with the second limit portion at a first direction and a second direction in a plane where the first top cover component is located; and in the open state, an opening side of the first top cover component is away from the first opening, and the first limit portion is separated from the second limit portion.

According to the top cover assembly of the embodiment of the present disclosure, by providing the first limit portion on the first frame body, and providing the second limit portion on the first top cover component, in the closed state, the first limit portion is limitedly matched with the second limit portion at the first direction and the second direction in the plane where the first top cover component is located, to prevent the first top cover component from moving along the first direction and the second direction in the plane where the first top cover component is located in the closed state, which results in uneven gaps between the first top cover component and the first frame body.

According to an embodiment of the present disclosure, the first limit portion includes a first limit hole, the second limit portion includes a limit block and/or a snap tongue embedded in the corresponding first limit hole in the closed state.

According to an embodiment of the present disclosure, the first top cover component is provided with a third limit portion, and the first frame is provided with a fourth limit portion corresponding to the third limit portion, where in the closed state, the first limit portion is limitedly matched with the second limit portion in a direction perpendicular to the plane where the first top cover component is located.

According to an embodiment of the present disclosure, the third limit portion is located on a side of the first top cover component opposite to the opening side, the third limit portion includes a hook-shaped structure, and the fourth limit portion includes a second limit hole, where in the closed state, the hook-shaped structure is embedded in the second limit hole and connected with an inner wall of the second limit hole by a snap-fit.

According to an embodiment of the present disclosure, the top cover assembly further includes:
a second top cover component detachably connected to the first frame body, the first frame provided with a second opening located on a side of the first opening, and the second top cover component is switchable between a closed position and an open position,
where in the closed position, the second top cover component covers the second opening, and in the open position, the second top cover component is away from the second opening.

According to an embodiment of the present disclosure, the second top cover component is connected to the first frame body through a crank arm component, and
a flip angle of the second top cover component relative to the first frame body is greater than 90°.

According to an embodiment of the present disclosure, a side of the first top cover component opposite to the opening side is connected to the first frame body through a flexible member,
where in the open state, the first top cover component is located above the second top cover component, and an included angle between the first top cover component and the second top cover component is less than a predetermined angle.

According to an embodiment of the present disclosure, the flexible member is detachably connected to at least one of the first frame body or the first top cover component.

According to an embodiment of the present disclosure, a limit portion is formed on a side of the second top cover component away from the first opening or a side of the first frame body away from the first opening,
where in the open state, the first top cover component is located above the second top cover component, and is limitedly matched with the limit portion.

According to an embodiment of the present disclosure, the top cover assembly further includes:
an ejector rod component switchable between an extended state and a retracted state,
where in the retracted state, the first top cover component covers the first opening; and in the extended state, the ejector rod component abuts against the first frame body or the first top cover component, and
an opening gap exists between the opening side of the first top cover component and the first frame body.

According to an embodiment of the present disclosure, the ejector rod component includes:
a first elastic member, where the first frame body or the first top cover component is formed with a first mounting hole, the first elastic member is provided inside the first mounting hole, and a first end of the first elastic member abuts against a bottom wall of the first mounting hole; and
an ejector rod provided inside the first mounting hole and abutting against a second end of the first elastic member, where in the retracted state, the ejector rod is retracted into the first mounting hole, and the first elastic member is in a first compressed state; and in the extended state, the ejector rod extends from the first mounting hole and abuts against the first frame body, and the first elastic member is in a second compressed state.

A water softening device according to the present disclosure includes a machine body and a top cover assembly of any one of the above embodiments, and the machine body is connected to the first frame body.

Additional aspects and advantages of the present disclosure will be set forth in part in the description which follows and, in part, will be apparent from the description, or may be learned by practice of the presented disclosure.

### BRIEF DESCRIPTION OF DRAWINGS

In order to clearly illustrate the solutions according to the present application or the related art, the accompanying drawings used in the description of the embodiments of the present application or the related art are briefly introduced below. It should be noted that, the drawings in the following description are of only some embodiments of the present application. For those of ordinary skill in the art, other drawings can also be obtained according to these drawings without creative efforts.
FIG. 1 is a first schematic structural diagram of a water softener according to an embodiment of the present disclosure;
FIG. 2 is a second schematic structural diagram of a water softener according to an embodiment of the present disclosure;
FIG. 3 is an exploded schematic structural diagram of a top cover device according to an embodiment of the present disclosure;
FIG. 4 is a partial enlarged schematic structural diagram of K in FIG. 1 according to an embodiment of the present disclosure;
FIG. 5 is a schematic structural diagram of a middle frame assembly according to an embodiment of the present disclosure;
FIG. 6 is an exploded schematic structural diagram of a middle frame assembly according to an embodiment of the present disclosure;
FIG. 7 is a schematic structural diagram showing an installation of a snap-fit assembly and a plug assembly according to an embodiment of the present disclosure;
FIG. 8 is a schematic structural diagram of a flip cover assembly according to an embodiment of the present disclosure;
FIG. 9 is a schematic structural diagram of a fixing disc according to an embodiment of the present disclosure;
FIG. 10 is a schematic structural diagram of fixing a top of a resin tank using a fixing plate according to an embodiment of the present disclosure;
FIG. 11 is a first schematic structural diagram of a top cover assembly of which a first top cover component is in an open state according to an embodiment of the present disclosure;
FIG. 12 is a partial enlarged schematic structural diagram of C in FIG. 11;
FIG. 13 is a schematic structural diagram of a top cover assembly of which a first top cover component is in a closed state according to the embodiment of the present disclosure;
FIG. 14 is a second schematic structural diagram of a top cover assembly of which a first top cover component is in an open state according to the embodiment of the present disclosure;
FIG. 15 is a partial enlarged schematic structural diagram of D in FIG. 14;
FIG. 16 is a partial enlarged schematic structural diagram of A in FIG. 14;
FIG. 17 is a first cross-sectional schematic structural diagram of a locking component according to an embodiment of the present disclosure;
FIG. 18 is a three-dimensional schematic structural diagram of a button according to an embodiment of the present disclosure;
FIG. 19 is a second cross-sectional schematic structural diagram of a locking component according to an embodiment of the present disclosure;
FIG. 20 is a first cross-sectional schematic structural diagram of an ejector rod component according to an embodiment of the present disclosure;
FIG. 21 is a second cross-sectional schematic structural diagram of an ejector rod component according to an embodiment of the present disclosure;
FIG. 22 is an exploded schematic structural diagram of a top cover component according to an embodiment of the present disclosure;
FIG. 23 is an exploded schematic structural diagram of a first housing and a light-transmitting panel according to an embodiment of the present disclosure;
FIG. 24 is a schematic structural diagram of an assembly relationship between a first seal and a side edge of an opening according to an embodiment of the present disclosure;
FIG. 25 is a schematic structural diagram of an assembly relationship between a first seal and a side edge of an opening according to another embodiment of the present disclosure;
FIG. 26 is a schematic structural diagram of a top cover assembly according to an embodiment of the present disclosure.

### Reference numerals:

10: box body; 11: receiving cavity; 12: box opening;
20: middle frame assembly; 21: middle frame; 211: buckle head; 212: first guide surface; 213: flow guide slot; 214: mounting slot; 22: middle frame decorative ring; 221: buckle slot; 222: second guide surface; 23: snap-fit assembly; 231: snap-fit slot; 2311: first snap opening; 2312: second snap opening; 2313: third opening; 232: limit portion; 24: first through opening; 25: second through opening; 26: abut portion; 27: avoidance opening;
30: first top cover assembly; 31: cover body; 301: support portion; 311: panel layer; 312: inner lining layer; 313: support layer; 32: first crank arm; 321: first long-arm segment; 322: first short-arm segment; 33: first damping shaft; 34: adapter seat; 35: first stop portion; 36: decorative member;
40: second top cover assembly;
50: fixing disc; 51: flexible disc body; 52: first opening; 53: notch; 54: first reinforcing rib; 55: second reinforcing rib; 56: plug; 561: guide portion; 562: snap-fit portion;
60: resin tank; 70: inner frame; 80: valve control assembly; 90: salt well assembly; 170: plug assembly; 1701: first plug terminal; 1702: second plug terminal; 180: salt pouring grille; 190: battery assembly;
100: top cover assembly; 110: first frame body; 111: step; 112: flexible member; 113: snap slot; 114: limit block; 120: first top cover component; 122: first housing; 123: second housing; 125: positioner; 126: first sealing portion; 127: second sealing portion; 128: third sealing portion; 129: first sealing surface; 130: second top cover component; 131: second sealing surface; 132: third sealing surface; 133: light-transmitting panel; 134: raised edge; 135: groove; 140: ejector rod component; 141: first elastic member; 142: ejector rod; 143: mounting hole limit portion; 144: ejector rod limit portion; 145: chute; 146: strip-shaped separation slot; 147: first positioning post; 150: locking component; 151: button; 152: button limit portion; 153: second elastic member; 154: second snap tongue; 160: first limit portion; 161: second limit portion; 162: third limit portion; 163: fourth limit portion; 164: second crank arm; 165: second long-arm segment; 166: second short-arm segment; 167: second stop portion; 168: second damping shaft; 169: fixing seat.

### DETAILED DESCRIPTION OF THE EMBODIMENTS

Embodiments of the present disclosure are further described in detail below with reference to the drawings and embodiments. The following embodiments are intended to illustrate the disclosure, but are not intended to limit the scope of the disclosure.

In the description of the embodiments of the present disclosure, it is to be noted that the orientation or positional relationships indicated by terms such as "center", "longitudinal", "lateral", "upper", "lower", "front", "rear", "left", "right", "vertical", "horizontal", "top", "bottom", "inside", "outside", etc. are based on the orientation or positional relationship shown in the drawings, and are merely for the convenience of describing the embodiments of the present disclosure and simplifying the description, rather than indicating or implying that the device or component stated must have a particular orientation, is constructed and operated in a particular orientation, and thus is not to be construed as limiting the embodiments of the present disclosure. Moreover, the terms "first", "second", "third", and the like are used for descriptive purposes only and are not to be construed as indicating or implying relative importance.

In the description of the present disclosure, it should be noted that, unless explicitly specified and defined otherwise, the terms "connected to" and "connected" shall be understood broadly, for example, it may be either fixedly connected or detachably connected, or may be integrated; it may be either mechanically connected, or electrically connected; it may be either directly connected, or indirectly connected through an intermediate medium. The specific meanings of the terms above in embodiments of the present disclosure can be understood by a person skilled in the art in accordance with specific conditions.

In the embodiments of the present disclosure, unless otherwise clearly stated and defined, the first feature being located "on" or "under" the second feature means that the first feature is in direct contact with the second feature or the first feature is in contact with the second feature by an intervening media. In addition, the first feature is "on", "above" and "over" the second feature can refer to that the first feature is directly above or obliquely above the second feature, or simply refer to that the level height of the first feature is higher than that of the second feature. The first feature is "under", "below" and "beneath" the second feature can refer to that the first feature is directly below or obliquely below the second feature, or simply refer to that the level height of the first feature is lower than that of the second feature.

A traditional water softener mainly includes a salt box, a resin tank mounted in the salt box, and a control device. When the water softener is working, functional ions of a resin unit in the resin tank exchange with calcium ions and magnesium ions in water, which reduces a concentration of calcium ions and magnesium ions in the water, which reduces hardness of water. When the resin unit in the resin tank adsorbs fully calcium ions and magnesium ions, the resin unit needs to be regenerated with special brine dissolved in the salt box to repeatedly use the resin unit in the resin tank.

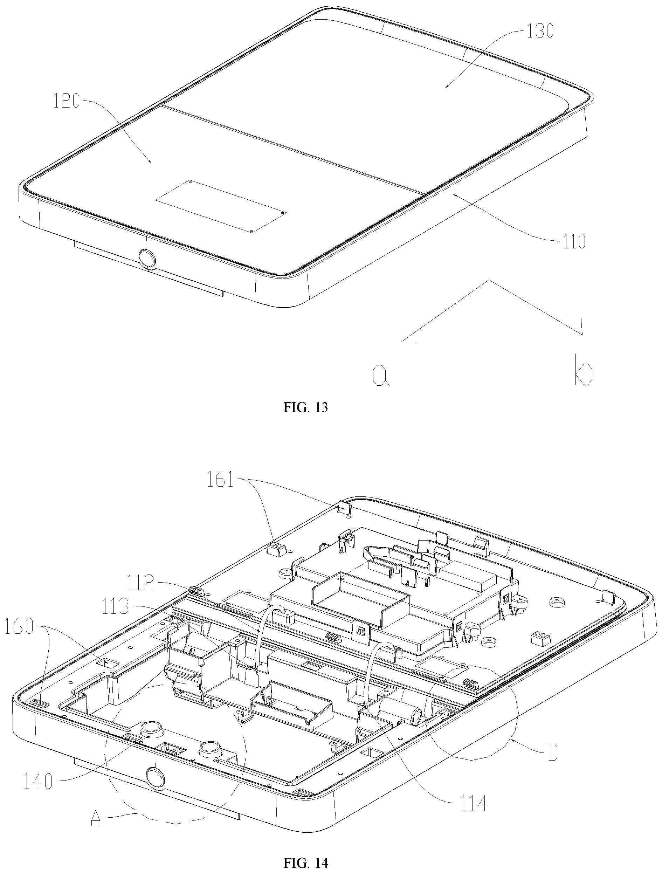

However, when an operator uses a water softener, they often encounter a problem that a plug assembly on the water softener is easily separated, which results in an overall power outage, inconvenience in a salt adding operation, and inconvenience in maintenance for the valve control assembly and salt well assembly on the water softener. In order to solve the above problem, an embodiment of the present disclosure provides a water softener as shown in FIG. 14 to FIG. 23.

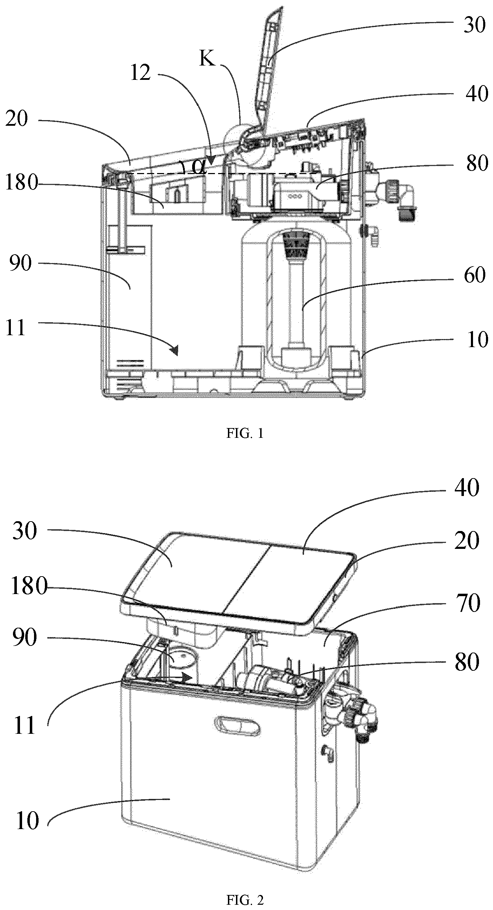

As shown in FIG. 1 and FIG. 2, the water softener according to the embodiment of the present disclosure includes a box body 10, a top cover device, a resin tank 60 and a salt well assembly 90. A receiving cavity 11 is formed in the box body 10, and a box opening 12 communicating with the receiving cavity 11 is provided at a top of the box body 10, the top cover device is mounted on the box opening 12, and the resin tank 60 and the salt well assembly 90 are mounted in the receiving cavity 11 respectively. The box body 10 shown in this embodiment is configured to receive salt, and the box body 10 is also referred to as the salt box of the traditional water softener.

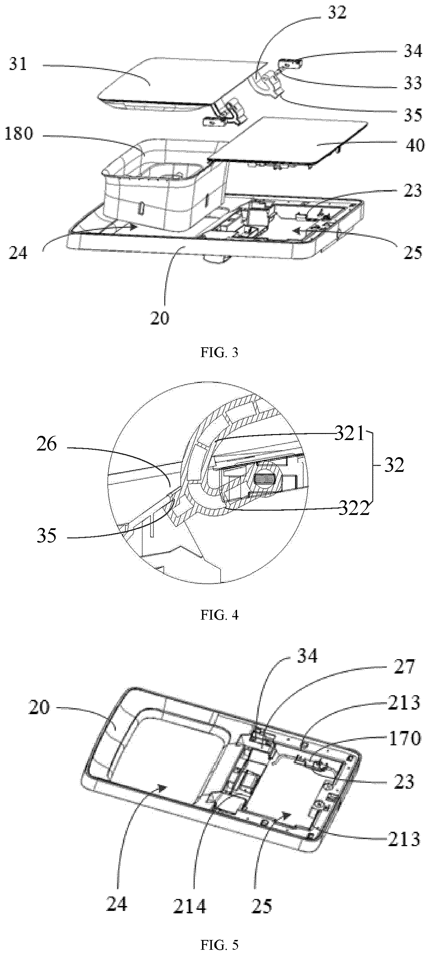

As shown in FIG. 3, the top cover device according to the embodiment of the present disclosure includes a middle frame assembly 20, a first top cover assembly 30 and a second top cover assembly 40.

The middle frame assembly 20 is detachably connected to the box body 12 of the water softener 10 and the middle frame assembly 20 is provided with a first through opening 24. The first through opening 24 is used as a salt adding opening of the water softener and communicates with the receiving cavity 11.

In order to facilitate the salt adding operation, in the present embodiment, an end of the first top cover assembly 30 is rotatably connected to the middle frame assembly 20. In this case, the first top cover assembly 30 may also be called a flip cover assembly. By controlling the first top cover assembly 30 to flip relative to the middle frame assembly 20, the first through opening 24 can be controlled to be opened and closed by the first top cover assembly 30 conveniently.

As shown in FIG. 3, the first top cover assembly 30 of the embodiment of the present disclosure includes a cover body 31 and a first crank arm 32. A first end of the first crank arm 32 is connected to an end of the cover body 31. A second end of the first crank arm 32 is rotatably connected to the middle frame assembly 20.

An adapter seat 34 is provided at the middle frame assembly 20, and the second end of the first crank arm 32 is rotatably connected to the adapter seat 34. In order to ensure the aesthetics of the first crank arm 32, a decorative member 36 is provided at a side of the first crank arm 32, and the first crank arm 32 and the decorative member 36 are detachably connected through a snap-fit structure.

In order to prevent the movement of the first crank arm 32 from interfering with the middle frame assembly 20, in the present embodiment, an avoidance opening 27 is provided at the middle frame assembly 20. At least part of the first crank arm 32 is located in the avoidance opening 27, and the adapter seat 34 is provided at a side of the avoidance opening 27.

In this embodiment, based on the arrangement of the first crank arm 32, the cover body 31 is flippable relative to the middle frame assembly 20 between a first position at which the first through opening 24 is closed and a second position at which the first through opening 24 is opened, and it is ensured that the cover body 31 can reach a relatively large flip angle relative to the middle frame assembly 20.

In some embodiments, the structure design of the first crank arm 32 can be optimized, the flip angle of the cover body 31 relative to the middle frame assembly 20 is greater than 90°, an upper side of the first through opening 24 can reach a sufficiently large open space when the cover body 31 is in the second position, to facilitate the operator to add salt into the box body 10 through the first through opening 24.

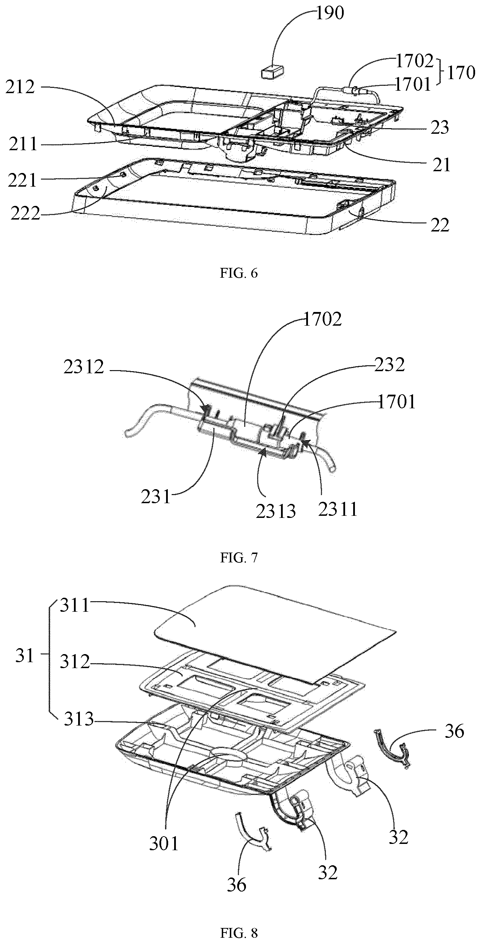

As shown in FIG. 2 and FIG. 8, in order to ensure that the flip angle of the cover body 31 relative to the middle frame assembly 20 is greater than 90°, the first crank arm 32 shown in this embodiment includes a first long-arm segment 321 and a first short-arm segment 322.

The first long-arm segment 321 is arc-shaped, and the first short-arm segment 322 is linear. A first end of the first long-arm segment 321 is connected to an end of the cover body 31, a second end of the first long-arm segment 321 is connected to a first end of the first short-arm segment 322, and a second end of the first short-arm segment 322 is rotatably connected to the adapter seat 34 on the middle frame assembly 20.

A distance between the second end of the first short-arm segment 322 and the first end of the first long-arm segment 321 is shorter than a distance between the first end of the first short-arm segment 322 and the first end of the first long-arm segment 321, and the shape of the first crank arm 32 is similar to a fishhook.

In the present embodiment, the optimized design of the first crank arm 32 not only ensures that the cover body 31 can reach a relatively large flip angle relative to the middle frame assembly 20, but also ensures that the cover body 31 is as far away from the first through opening 24 as possible when reaching a maximum flip angle, which improves convenience of salt adding operation.

As shown in FIG. 4 and FIG. 8, the first top cover assembly 30 shown in this embodiment is provided with a first stop portion 35. The first stop portion 35 is connected to the first crank arm 32. The first stop portion 35 abuts against or is separated from the middle frame assembly 20.

In some embodiments, an abut portion 26 is provided on the middle frame assembly 20. When the cover body 31 is in the first position, the first stop portion 35 is separated from the abut portion 26. When the cover body 31 is in the second position, the first stop portion 35 abuts against the abut portion 26.

The second position where the cover body 31 is located shown in the present embodiment corresponds to a position where the cover body 31 reaches the maximum flip angle relative to the middle frame assembly 20. For example, the maximum flip angle of the cover body 31 relative to the middle frame assembly 20 can reach 100° to 150°.

When the cover body 31 is in the second position, the cover body 31 is inclined relative to a vertical surface. It is ensured that the cover body 31 reaches a force-balanced state based on abutting the stop portion 35 against the abut portion 26 and cover body 31 can be stably maintained in the second position without manual support of the operator, and the state of the cover body 31 will not change again. Only when the first through opening 24 needs to be closed, the cover body 31 is flipped from the second position to the first position under driving of the operator.

As shown in FIG. 4, in order to conveniently control the flip angle of the cover body 31 relative to the middle frame assembly 20, the first stop portion 35 shown in this embodiment is provided at an outer side of the first crank arm 32.

Since at least part of the first crank arm 32 is located in the avoidance opening 27 on the middle frame assembly 20, in this embodiment, the abut portion 26 is provided at a first wall of the avoidance opening 27, and the first wall of the avoidance opening 27 is opposite to the outer side of the first crank arm 32. When the cover body 31 is in the first position, the first stop portion 35 is away from the abut portion 26. The cover body 31 is flipped in a first rotational direction relative to the middle frame assembly 20. The first stop portion 35 is gradually close to the abut portion 26 along with the deflection of the crank arm 32 during a process in which the cover body 31 reaches the second position from the first position. The cover body 31 reaches the second position when the first stop portion 35 abuts against the abut portion 26 and the cover body 31 cannot continue to flip along the first rotational direction.

In some embodiments, in order to control the maximum flip angle of the cover body 31 based on actual needs, the first crank arm 32 is provided with a plurality of mounting positions, and the plurality of mounting positions are arranged in sequence along an extension direction of the first crank arm 32, and the first stop portion 35 is detachably connected to any one of the plurality of mounting positions.

In some examples, the plurality of mounting positions may be provided at the outer side of the first crank arm 32, and each mounting position can be a buckle slot provided at the outer side of the first crank arm 32. The stop portion 35 is formed with a buckle head. After determining the maximum flip angle of the cover body 31, the operator can determine the buckle slot corresponding to the maximum flip angle, and then directly buckle the buckle head on the first stop portion 35 into the buckle slot corresponding to the maximum flip angle, and the cover body 31 can be controlled to reach the required maximum flip angle.

As shown in FIG. 3, the flip cover assembly shown in this embodiment further includes a first damping shaft 33. An end of the first damping shaft 33 is connected to the second end of the first crank arm 32, and another end of the first damping shaft 33 is connected to the adapter seat 34 on the middle frame assembly 20.

In this embodiment, the first damping shaft 33 may include a first shaft segment and a second shaft segment, the second end of the first crank arm 32 is connected to an end of the first shaft segment, another end of the first shaft segment is rotatably connected to an end of the second shaft segment, and another end of the second shaft segment is connected to the adapter seat 34.

In this embodiment, another end of the first shaft segment is rotatably connected to the end of the second shaft segment, and it is also ensured that a contact friction force between another end of the first shaft segment and the end of the second shaft segment is greater than a predetermined value. The second end of the first crank arm 32 is rotatably connected to the middle frame assembly 20 through the first damping shaft 33, and it is also ensured that the cover body 31 can stay in any required suspend position during the flipping process.

In some embodiments, in order to ensure that the cover body 31 can be flipped reliably relative to the middle frame assembly 20, a plurality of first crank arms 32 are provided in this embodiment. The plurality of first crank arms 32 are arranged side by side, first ends of each crank arm 32 are connected to an end of the cover body 31, and second ends of each first crank arm 32 are rotatably connected to the middle frame assembly 20 through the first damping shaft 33.

As shown in FIG. 8, in order to ensure the structural strength of the cover body 31 corresponding to the flip cover assembly, the cover body 31 shown in this embodiment includes a panel layer 311 and a support assembly. The panel layer 311 is connected to the support assembly. A support portion 301 is provided at the support assembly, and the support portion 301 is supported in a middle region of the panel layer 311.

The panel layer 311 shown in this embodiment is mounted on an upper surface of the support assembly, and the support portion 301 on the support assembly is in contact with the middle region of the panel layer 311. Since tempered glass has greater structural strength and can be cut into different shapes based on actual needs, the panel layer 311 shown in this embodiment can be a tempered glass layer.

The support assembly shown in this embodiment can be made of engineering plastic or steel structure with a certain structural strength.

Here, the flip cover assembly shown in this embodiment is used in a water softener, to open or close the salt adding opening on the water softener. For example, when the middle frame assembly 20 is mounted on the box opening 12 of the water softener, the flip cover assembly is rotatably mounted on the first through opening 24 on the middle frame assembly 20 to open or close the first through opening 24.

Based on a supporting effect of the support portion 301 on the middle region of the panel layer 311, deformation resistance of the panel layer 311 can be increased. When the middle region of the cover body 31 is stressed too much, the middle region of the panel layer 311 can be prevented from being recessed.

In some embodiments, in order to facilitate assembly of the panel layer 311 and the support assembly, the support assembly shown in this embodiment includes an inner lining layer 312 and a support layer 313. The inner lining layer 312 is sandwiched between the panel layer 311 and the support layer 313, and the panel layer 311, the inner lining layer 312 and the support layer 313 are connected in sequence.

During an actual assembly process, an adhesive layer may be provided between the panel layer 311 and the inner lining layer 312. The adhesive layer adopts 3M glue or polyurethane reactive glue (PUR glue, moisture-curing reactive polyurethane hot-melt glue), which are well known in the art.

In order to ensure reliability of a bonding between the panel layer 311 and the inner lining layer 312, in this embodiment, a groove can be provided at a side of the inner lining layer 312 towards the panel layer 311, and a part of the adhesive layer is attached to the groove. When the panel layer 311 and the inner lining layer 312 are attached together, another part of the adhesive layer is attached to the panel layer 311. A depth of the groove can be 0.3~0.5 mm.

In order to facilitate assembly of the inner lining layer 312 and the support layer 313, in this embodiment, the inner lining layer 312 and the support layer 313 can be connected through a plurality of buckle structures. The buckle structure is consisted of a buckle block and a buckle slot that can be buckled together.

In an example, a plurality of buckle blocks may be provided at a side of the inner lining layer 312 towards the support layer 313, and a plurality of buckle slots may be provided at a side of the support layer 313 towards the inner lining layer 312. When the side of the inner lining layer 312 towards the support layer 313 is attached to the side of the support layer 313 towards the inner lining layer 312, the plurality of buckle blocks are buckled in the plurality of buckle slots in one-to-one correspondence to conveniently connect the inner lining layer 312 to the support layer 313 detachably.

In some embodiments, in order to conveniently support the middle region of the panel layer 311, the support layer 313 shown in this embodiment includes a first support platform, and the first support platform is provided in the middle region of the support layer 313; the inner lining layer 312 includes a second support platform, and the second support platform is provided in the middle region of the inner lining layer 312. The first support platform and the second support platform are connected to form the support portion 301 shown in the above embodiment.

The first support platform and the second support platform can be cylindrical, cube-shaped, boss-shaped, etc., which are not limited here.

As shown in FIG. 8, the support layer 313 shown in this embodiment includes a first frame and a first extension rib. There are a plurality of first extension ribs, ends of the plurality of first extension ribs are respectively connected to an inner side of the first frame, and another ends of the plurality of first extension ribs respectively extends towards a center of the first frame and are connected to a side of the first support platform located in the middle of the first frame.

The inner lining layer 312 shown in this embodiment includes a second frame and a second extension rib. There are a plurality of second extension ribs, ends of the plurality of second extension ribs are respectively connected to an inner side of the second frame, and another ends of the plurality of second extension ribs respectively extends towards a center of the second frame and are connected to a side of the second support platform in the middle of the second frame.

The first frame and the second frame shown in this embodiment are detachably connected through the buckle structure shown in the above embodiment. While the first support platform and the second support platform are arranged opposite to each other, the plurality of first extension ribs and the plurality of second extension ribs can also be arranged in one-to-one correspondence relative to each other.

As shown in FIG. 5, in practical applications, a first plug terminal 1701 is provided at an end of a power adapter of the water softener, and a second plug terminal 1702 is provided at an end of an internal power cord of the water softener. After a first end of the first plug terminal 1701 is plugged into a first end of the second plug terminal 1702 to form a plug assembly 170, an external power supply can supply power to the water softener through the plug assembly 170. Since the plug assembly 170 is usually placed randomly in the water softener, when an end of the power adapter is stressed, the first plug terminal 1701 is easily separated from the second plug terminal 1702, which causes the water softener to not work properly.

As such, in this embodiment, a mounting component is provided at the middle frame assembly 20. The mounting component is configured to mount the plug assembly 170 to prevent the plug assembly 170 from being randomly placed in the water softener, which causes that the first plug terminal 1701 and the second plug terminal 1702 on the plug assembly 170 are separated under an action of an external force.

The mounting component may be a binding component, a clamping component, a snap-fit component, a locking component, etc. that are well known in the art, and are not specifically limited here.

In order to mount conveniently the plug assembly 170, the mounting component shown in this embodiment may be a snap-fit assembly 23.

As shown in FIG. 5 to FIG. 7, in order to solve a problem that the plug assembly 170 is easily separated under the action of the external force, this embodiment provides a middle frame assembly 20. The middle frame assembly 20 includes a middle frame 21 and a snap-fit assembly 23. The snap-fit assembly 23 includes a snap-fit slot 231. The snap-fit slot 231 is connected to the middle frame 21. The snap-fit slot 231 is configured to receive the plug assembly 170. The snap-fit slot 231 is provided with a first snap opening 2311 and a second snap opening 2312, and the first snap opening 2311 and the second snap opening 2312 are provided at slot walls at both ends of the snap-fit slot 231 along a length direction respectively.

The second end of the first plug terminal 1701 generally has a first connection wire extending towards the power adapter, and a diameter of the first connection wire is less than a diameter of the second end of the first plug terminal 1701. Accordingly, the second end of the second plug terminal 1702 generally has a second connection wire extending towards electrical components inside the water softener, and a diameter of the second connection wire is less than a diameter of the second end of the second plug terminal 1702.

In practical applications, the first connection wire corresponding to the first plug terminal 1701 penetrates through the first snap opening 2311, and the first snap opening 2311 is connected to the second end of the first plug terminal 1701 by a snap-fit. The second connection wire corresponding to the second plug terminal 1702 penetrates through the second snap opening 2312, and the second snap opening 2312 is connected to the second end of the second plug terminal 1702 by a snap-fit.

In some examples, a width of the first snap opening 2311 may be set to be less than a maximum diameter of the second end of the first plug terminal 1701, and a width of the second snap opening 2312 may be set to be less than a maximum diameter of the second end of the second plug terminal 1702.

When the first plug terminal 1701 is subjected to a traction force from the power adapter, the first plug terminal 1701 cannot pass through the first snap opening 2311 under an action of the traction force, and the first snap opening 2311 limits the first plug terminal 1701 from moving towards a side away from the second plug terminal 1702, which can prevent the plug assembly 170 from being separated under the action of an external force.

When the operator accidentally exerts a pulling force on a connection wire of the second plug terminal 1702, the second plug terminal 1702 cannot pass through the second snap opening 2312 under the action of the traction force, and the second snap opening 2312 limits the second plug terminal 1702 from moving towards a side away from the first plug terminal 1701, which can prevent the plug assembly 170 from being separated under the action of an external force.

As shown in FIG. 7, in order to further prevent the first plug terminal 1701 from separating from the second plug terminal 1702 under the action of the traction force of the power adapter, the snap assembly 23 shown in this embodiment further includes a limit portion 232. The positioning portion 232 is connected to the middle frame 21, and the limit portion 232 is provided outside the snap-fit slot 231 and close to a slot opening of the snap-fit slot 231.

The limit portion 232 may be a limit block well-known in the art. A clamping gap is formed between a side of the limit block towards the snap-fit slot 231 and a slot bottom of the snap-fit slot 231. The width of the clamping gap is greater than or equal to a maximum diameter of the first plug terminal 1701.

In practical applications, a protrusion is usually provided at an end of the first plug terminal 1701 away from the power adapter. After the first plug terminal 1701 is mounted into the snap-fit slot 231 and snap-fitted with the second plug terminal 1702, the limit portion 232 is provided between the protrusion and the first snap opening 2311 along a length direction of the snap-fit slot 231, and the limit portion 232 abuts against the protrusion.

As such, when the power adapter pulls the first plug terminal 1701 under its own gravity, the first snap opening 2311 limits an end of the first plug terminal 1701 close to the power adapter, and the limit portion 232 further limits the end of the first plug terminal 1701 away from the power adapter. The snap-fit assembly 23 shown in this embodiment can reliably prevent the first plug terminal 1701 and the second plug terminal 1702 from separating from each other under the pulling force of external force.

As shown in FIG. 7, in order to facilitate the installation of the plug assembly 170, the snap-fit slot 231 shown in this embodiment is provided with a third opening 2313. The third opening 2313 is provided at a slot wall of the snap-fit slot 231 along the length direction, and the third opening 2313 is used for the first plug terminal 1701 or the second plug terminal 1702 to pass through.

In some embodiments, the third opening 2313 shown in this embodiment extends along the length direction of the snap-fit slot 231. In order not to affect the snap-fit effect of the snap-fit slot 231 on the entire plug assembly 170, in this embodiment, a length of the third opening 2313 extending along the length direction of the snap-fit slot 231 is less than a length of the snap-fit slot 231, and longer than a length of the first plug terminal 1701 or a length of the second plug terminal 1702.

As shown in FIG. 2, FIG. 5 and FIG. 6, a flow guide slot 213 is provided at a first surface of the middle frame assembly 20 shown in this embodiment, at least one end of the flow guide slot 213 extends to a second surface of the middle frame assembly 20, the second surface of the middle frame assembly 20 is opposite to the first surface of the middle frame assembly 20, and the second surface of the middle frame assembly 20 faces a bottom surface of the box body 10.

The flow guide slot 213 may be provided on a first surface of the middle frame 21, the snap-fit assembly 23 is provided at a side of the flow guide slot 213, at least one end of the flow guide slot 213 extends to a second surface of the middle frame 21, the second surface of the middle frame 21 is opposite to the first surface of the middle frame 21, and the second surface of the middle frame 21 faces the bottom surface of the box body 10.

The middle frame assembly 20 shown in this embodiment is detachably connected to the inner frame 70 in the box body 10 through the middle frame 21.

After the water softener is filled with water, in order to prevent water from flowing into or dripping onto electrical components inside the water softener, especially to prevent water droplets from dripping onto the plug assembly 170, in this embodiment, the flow guide slot 213 collects water droplets dripping onto the first surface of the frame 21, and guides the collected water droplets to flow into the box body 10, which prevents short circuits of the electrical components inside the water softener and prevents the operator from accidental electric shock during use, which ensures safety.

In the above embodiment, in order to meet a rotation requirement of the first crank arm 32, an avoidance opening 27 is provided at the middle frame assembly 20. An end of the avoidance opening 27 is formed on the first surface of the middle frame assembly 20, and another end of the avoidance opening 27 is formed on the second surface of the middle frame assembly 20. In this embodiment, at least one end of the flow guide slot 213 can be extended to the avoidance opening 27, and the water flow collected on the first surface of the middle frame 21 flows directly into the box body 10 through the avoidance opening 27.

As shown in FIG. 5 and FIG. 6, a mounting slot 214 is provided at the first surface of the middle frame 21 shown in this embodiment. A slot wall of the mounting slot 214 protrudes from the first surface of the middle frame 21, and the mounting slot 214 is configured to mount the battery assembly 190.

It can be understood that, in this embodiment, a first surrounding rib, a second surrounding rib, a third surrounding rib and a fourth surrounding rib can be provided at the first surface of the middle frame 21, and are connected in sequence as a ring shape, to form a mounting slot 214 on the first surface of the middle frame 21.

In this embodiment, lengths and distribution positions of the first surrounding rib, the second surrounding rib, the third surrounding rib and the fourth surrounding rib can be adaptively provided based on a specific shape of the battery assembly 190, and the mounting slot 214 is shaped to be matched with the battery assembly 190.

As shown in FIG. 5 and FIG. 6, the middle frame assembly 20 shown in this embodiment further includes: a middle frame decorative ring 22. The middle frame decorative ring 22 sleeves outside the middle frame 21 to ensure the aesthetics of the middle frame assembly 20.

In practical applications, a large matching gap often exists between the middle frame 21 and the middle frame decorative ring 22 due to different shrinkage degrees thereof, which not only affects the overall aesthetics of the middle frame assembly 20, but also is detrimental to the middle frame assembly 20 on the box body 10.

As such, the middle frame assembly 20 shown in this embodiment is provided with a plurality of quick-connect structures. The plurality of quick-connect structures are arranged sequentially along a circumferential direction of the middle frame 21, and each quick-connect structure is configured to connect the middle frame 21 with the middle frame decorative ring 22.

In some embodiments, the middle frame assembly 20 can be fastened at a plurality of points along the circumferential direction based on a plurality of quick-connect structures, which ensures that the matching gap between the middle frame 21 and the middle frame decorative ring 22 is evenly distributed.

In some examples, the quick-connect structure shown in this embodiment can be a locking bolt, a plurality of first screw holes are provided at the middle frame 21 and are arranged along the circumferential direction of the middle frame 21. A plurality of second screw holes are provided at the middle frame decorative ring 22, the plurality of second screw holes are arranged along the circumferential direction of the middle frame decorative ring 22, and the plurality of first screw holes and the plurality of second screw holes are arranged in one-to-one correspondence relative to each other.

When the middle frame 21 is assembled with the middle frame decorative ring 22, in this embodiment, it is only necessary to fasten the first screw holes and the second screw holes arranged in one-to-one correspondence relative to each other by using locking bolts.

In some examples, in order to further ensure the convenience of assembling the middle frame 21 and the middle frame decorative ring 22, the quick-connect structure shown in this embodiment adopts a buckle structure. The buckle structure includes a buckle head 211 and a buckle slot 221. One of the buckle head 211 and the buckle slot 221 is provided at the middle frame 21, another one of the buckle head 211 and the buckle slot 221 is provided at the middle frame decorative ring 22, and the buckle head 211 is buckled in the buckle slot 221.

As shown in FIG. 6, in this embodiment, a plurality of buckle heads 211 are provided at the outer side of the middle frame 21, and a plurality of buckle slots 221 are provided at an inner side of the middle frame decorative ring 22.

When the middle frame 21 is assembled with the middle frame decorative ring 22, the operator only needs to ensure that the plurality of buckle heads 211 on the middle frame 21 and the plurality of buckle slots 221 on the middle frame decorative ring 22 are arranged in one-to-one correspondence relative to each other, and then the middle frame 21 is pressed towards a side facing the middle frame decorative ring 22 to easily assemble the middle frame 21 and the middle frame decorative ring 22. When the middle frame 21 is disassembled from the middle frame decorative ring 22, only a force to for separating the middle frame 21 from the middle frame decorative ring 22 needs to be applied. The assembly and disassembly operations are simple and fast.

As shown in FIG. 6, in this embodiment, a first guide surface 212 is provided at the outer side of the middle frame 21, and a second guide surface 222 is provided at the inner side of the middle frame decorative ring 22. The first guide surface 212 is matched with the second guide surface 222.

The first guide surface 212 and the second guide surface 222 may be arc-shaped surfaces, inclined surfaces, etc. matched with each other, and are not specifically limited here.

When the middle frame 21 is assembled with the middle frame decorative ring 22, the middle frame decorative ring 22 can be quickly sleeved on the outer side of the middle frame 21 based on guiding effects of the first guide surface 212 and the second guide surface 222. After the middle frame 21 is assembled with the middle frame decorative ring 22, the first guide surface 212 is attached to the second guide surface 222.

In this embodiment, the buckle head 211 shown in the above embodiment can be provided at one of the first guide surface 212 and the second guide surface 222, and the buckle slot 221 can be provided at another one of the first guide surface 212 and the second guide surface 212. Under guidance of the first guide surface 212 and the second guide surface 222, the buckle head 211 is better buckled into the buckle slots 221 to quickly assemble the middle frame 21 with the middle frame decorative ring 22.

In this embodiment, the first guide surface 212 can be provided to extend along the circumferential direction of the middle frame 21, and the second guide surface 222 extends along the circumferential direction of the middle frame decorative ring 22. Both the first guide surface 212 and the second guide surface 222 are arc-shaped surfaces.

In this embodiment, both the first guide surface 212 and the second guide surface 222 are arc-shaped surfaces. Based on the first guide surface 212 and the second guide surface 222, the middle frame 21 and the middle frame decorative ring 22 can be quickly assembled. When the assembly is completed, it can also prevent the middle frame 21 from disengaging from the middle frame decorative ring 22 after they are assembled to a certain extent.

Based on the first top cover assembly 30 shown in the above embodiment, this embodiment provides a top cover device. The top cover device includes the middle frame assembly 20 and the first top cover assembly 30 shown in the above embodiment.

The first top cover assembly 30 shown in this embodiment is specifically a flip cover assembly. The flip cover assembly includes a cover body 31 and a first crank arm 32. The first end of the first crank arm 32 is connected to an end of the cover body 31. The second end of the first crank arm 32 is rotatably connected to the middle frame assembly 20. The middle frame assembly 20 is provided with a first through opening 24. The middle frame assembly 20 is detachably connected to the box opening 12 of the box body 10 shown in the above embodiment. The cover body is flipped relative to the middle frame assembly 20 between the first position in which the first through opening 24 is closed and the second position in which the first through opening 24 is opened.

In this embodiment, the structures of the cover body 31, the first crank arm 32 and the middle frame assembly 20 will not be described again one by one.

The middle frame assembly 20 is not limited to only being provided with the first through opening 24. The middle frame assembly 20 can further be provided with a second through opening 25. The first through opening 24 is convenient for the operator to add salt to the water softener, and the second through opening 25 is convenient for the operator to inspect and repair the internal components of the water softener.

As shown in FIG. 5 and FIG. 6, the middle frame assembly 20 shown in this embodiment is provided with a first through opening 24 and the second through opening 25. The middle frame assembly 20 is detachably connected to the box opening 12 of the box body 10 shown in the above embodiment.

Since the inner frame 70 is mounted on the box opening 12, in this embodiment, a plurality of groove buckles can be provided at the inner frame 70 along the circumferential direction, and a plurality of lump buckles in one-to-one correspondence with the plurality of groove buckles can be provided at the middle frame assembly 20 along the circumferential direction. By buckling the plurality of lump buckles to the plurality of groove buckles, the middle frame assembly 20 can be easily and detachably connected to the box opening 12.

The first top cover assembly 30 shown in this embodiment is connected to the middle frame assembly 20, and the first top cover assembly 30 is opposite to the first through opening 24 for closing or opening the first through opening 24. During actual installation, in this embodiment, the first top cover assembly 30 can be rotatably connected to the middle frame assembly 20, and the first through opening 24 can be closed or opened based on a flipping characteristic of the first top cover assembly 30. The first top cover assembly 30 shown in this embodiment is also called a flip cover assembly.

In some embodiments, the top cover device shown in this embodiment further includes a second top cover assembly 40. The second top cover assembly 40 is connected to the middle frame assembly 20, and the second top cover assembly 40 is opposite to the second through opening 25 for closing or opening the second through opening 25. In practical applications, the second top cover assembly 40 can play a role of displaying data and a window for observation, and the second top cover assembly 40 is also called a display cover assembly.

In the actual arrangement, the first through opening 24 and the second through opening 25 communicate with the receiving cavity 11 of the box body 10 respectively. One of the first through opening 24 and the second through opening 25 can be used as the salt adding opening of the water softener for adding salt into the box body 10, and another one of the first through opening 24 and the second through opening 25 is used as a maintenance opening to facilitate the operator to inspect the valve control assembly 80 at a top of the resin tank 60.

As shown in FIG. 1 and FIG. 2, the first through opening 24 shown in this embodiment is equipped with a salt pouring grille 180. The salt pouring grille 180 is cylindrical, an end of the salt pouring grille 180 away from the middle frame assembly 20 extends into the box body 10, the operator can add salt into the box body 10 through the first through opening 24, and the first through opening 24 serves as a salt adding opening.

The resin tank 60 shown in this embodiment is provided in the receiving cavity 11. A bottom of the resin tank 60 is connected to a bottom of the box body 10. The second through opening 25 is opposite to the top of the resin tank 60. After the second through opening 25 is opened through the second top cover assembly 40, the operator can directly observe the valve control assembly 80 on the top of the resin tank 60 through the second through opening 25. Therefore, in this embodiment, the second through opening 25 is used as the maintenance opening.

It should be noted that, the middle frame assembly 20 includes the middle frame 21 and the middle frame decorative ring 22. The above-mentioned first through opening 24 and the second through opening 25 are provided in the middle frame 21, and the middle frame decorative ring 22 sleeves on the outer side of the middle frame 21. In order to avoid affecting the installation of the salt pouring grille 180 in the first through opening 24, in this embodiment, the snap-fit assembly 23 shown in the above embodiment can be provided at an inner wall of the second through opening 25.

In this embodiment, since the first top cover assembly 30 for controlling the opening and closing of the salt adding opening and the second top cover assembly 40 for controlling the opening and closing of the maintenance opening are integrated on the middle frame assembly 20, the operator does not need to consider an order in which the first top cover assembly 30 and the second top cover assembly 40 are opened when performing an after-sales maintenance of the water softener, and only needs to disassemble the middle frame assembly 20 from a box opening 12 to implement an overall disassembly of the top cover device, which is simple and convenient, and a maintenance operation is simplified.

Based on the solution shown in the above embodiment, as shown in FIG. 1, this embodiment further provides a water softener. The water softener includes a box body 10 and a top cover device.

As shown in FIG. 1, a receiving cavity 11 is formed inside the box body 10 of the water softener, and a box opening 12 communicating with the receiving cavity 11is formed at the top of the box body 10.

The top cover device includes a middle frame assembly 20, which is detachably connected to the box opening 12. The middle frame assembly 20 is inclined in a first direction relative to the bottom surface of the box body 10 to guide water on a surface of the middle frame assembly 20 to flow into the receiving cavity 11. The surface of the middle frame assembly 20 is provided with the mounting component shown in the above embodiment, and the mounting component is configured to mount the plug assembly 170.

The mounting components shown in this embodiment protrude from the surface of the middle frame assembly 20. The mounting component can further prevent the water on the surface of the middle frame assembly 20 from flowing into the plug assembly 170, and the mounting component is used for mounting the plug assembly 170. After the water softener is filled with water, the water droplets attached to the surface of the middle frame assembly 20 will automatically flow along the surface of the middle frame assembly 20 under the action of its own gravity, and flow into the box body 10, thus the inclined arrangement of the middle frame assembly 20 can prevent water or liquid droplets from entering the plug assembly 170 as much as possible, which ensures a normal operation of the water softener and safety of power supply.

As shown in FIG. 1, an included angle α between the first direction and the bottom surface of the box body 10 shown in this embodiment is 5° to 30°. For example, the included angle α can be specifically 5°, 10°, 20°, and 30°, no specific limit is made here.

In some embodiments, the water softener shown in this embodiment further includes: a first top cover assembly 30 and a second top cover assembly 40. The first top cover assembly 30 is connected to the middle frame assembly 20, and is opposite to the first through opening 24 on the middle frame assembly 20 for closing or opening the first through opening 24. The second top cover assembly 40 is connected to the middle frame assembly 20, and the second top cover assembly 40 is opposite to the second through opening 25 on the middle frame assembly 20 for closing or opening the second through opening 25. The first through opening 24 and the second through opening 25 on the middle frame assembly 20 communicate with the receiving cavity 11 respectively, and the middle frame assembly 20 is detachably connected to the box opening 12.

Since the first top cover assembly 30 and the second top cover assembly 40 are respectively mounted on the middle frame assembly 20, when the middle frame assembly 20 is inclinedly provided, the first top cover assembly 30 and the second top cover assembly 40 are also inclinedly distributed accordingly, so that the whole top cover device is distributed inclinedly. In practical applications, if water droplets are attached to an outer surface of the top cover device, the water droplets can flow along the outer surface of the top cover device under the action of their own gravities, thereby preventing the water droplets from flowing into the box body 10.

The aesthetics of the overall structure of the water softener is ensured by arranging the top cover device in an inclined distribution structure. When the water softener is placed in door, a side of the water softener close to the first end of the middle frame assembly 20 can be placed against the wall, and the layout of the water softener can be consistent with the indoor environment.

Since the first through opening 24 is a salt adding opening and the second through opening 25 is the maintenance opening, a vertical height of a center of the second through opening 25 relative to the bottom surface of the box body 10 can be set to be greater than a vertical height of the first through opening 24 relative to the bottom surface of the box body 10. In this embodiment, by this arrangement, the height of the salt adding opening is reduced, and the operator can easily add salt to the box body 10 directly through the salt adding opening. The operation is simple and convenient.

In some embodiments, as shown in FIG. 3, in order to facilitate maintenance of the valve control assembly 80 on the top of the resin tank 60, the second top cover assembly 40 is detachably connected to the middle frame assembly 20.

In this embodiment, the second top cover assembly 40 and the middle frame assembly 20 can be connected through a buckle structure. In some embodiments, a buckle block may be provided at the second top cover assembly 40 and a buckle slot matched with the buckle block may be provided at the middle frame assembly 20. When the second top cover assembly 40 is mounted, the buckle block of the second top cover assembly 40 is directly buckled into the buckle slot on the middle frame assembly 20. The operation is simple and convenient.

In some embodiments, the second top cover assembly 40 is provided with at least one of a human-computer interaction module or a display window.

The human-computer interaction module shown in this embodiment is used by the operator to input relevant control instructions to the water softener and display relevant operating parameters of the water softener. The human-computer interaction module can be any one or a combination of digital displays, touch screen controllers and physical buttons.

In order to facilitate the operator to directly observe a fault state of the valve control assembly 80 at the top of the resin tank 60, a display window may also be provided at the second top cover assembly 40 in this embodiment. For example, in this embodiment, a through hole can be provided in the middle region or edge area of the second top cover assembly 40, and a transparent glass or transparent plastic plate can be mounted at the through hole, and the transparent glass or transparent plastic plate can form the display window shown in this embodiment.

Therefore, based on the roles of displaying data and observing a window played by the second top cover assembly 40 in practical applications, the second top cover assembly 40 can also be called a display cover assembly.

In the related art, when the resin tank 60 of the water softener is fixed, the bottom of the resin tank 60 is usually mounted on the bottom end of the box body 10. After the top of the resin tank 60 passes through the inner frame 70, a fixing disc 50 is configured to fix the resin tank 60.

However, in actual applications, the box body 10 is deformed to a certain extent due to differences in processing, and the resin tank 60 also has differences in height and dimensions due to processing or assembly deviations. However, a traditional fixing disc 50 lacks certain flexibility when fixing the resin tank 60, and it is difficult to meet requirements for installation of the fixing disc 50 and the fixing of the resin tank 60.

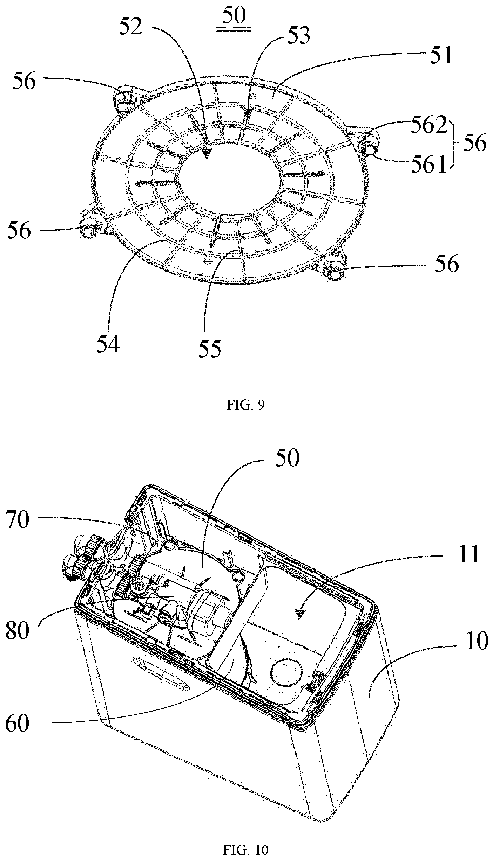

As shown in FIG. 9 and FIG. 10, in order to solve the above problems, this embodiment further provides a fixing disc 50. The fixing disc 50 includes a flexible disc body 51, and a first opening 52 and a plurality of notches 53 are provided at the flexible disc body 51. The plurality of notches 53 are arranged along a circumferential direction of the first opening 52 respectively, and opening ends of the notches 53 are formed on an opening wall of the first opening 52.

In this embodiment, when the top of the resin tank 60 is fixed, the flexible disc body 51 can be connected to the box body 10, and the first opening 52 of the flexible disc body 51 can be sleeved on the top of the resin tank 60. As such, even if a height of the resin tank 60 changes, the shape of the first opening 52 can undergo greater elastic deformation along a central axis of the resin tank 60 based on the design of the notch 53 on the flexible disc body 51. The first opening 52 can fix the top of the resin tank 60 in an interference fit. The fixing disc 50 not only meets an installation requirement in the box body 10, but also increases flexibility of fixing the resin tank 60, and the fixing operation is simple and convenient.

The flexible disc body 51 shown in this embodiment may be a rubber disc body or a plastic disc body with certain elastic deformation characteristics.

The shape of the first opening 52 on the flexible disc body 51 may be a circle, a square, a regular pentagon, etc., and is not specifically limited here. The shape of the first opening 52 may be circular, and when the flexible disc body 51 is in a natural state, the diameter of the first opening 52 is less than or equal to the maximum diameter of the top of the resin tank 60.

In addition, the shape of the notch 53 shown in this embodiment can be a strip or an arc, which is not specifically limited here. When the shape of the notch 53 is a strip, the notch 53 can extend in a linear shape or in an arc shape. When the shape of the notch 53 is an arc, the shape of the notch 53 may be semicircular or crescent-shaped. The shape of the notch 53 can also be triangular, trapezoidal or other shapes.

As shown in FIG. 9, the shape of the first opening 52 shown in this embodiment is circular, and the notch 53 is strip-shaped and extends along a radial direction of the first opening 52.

In this embodiment, based on the optimized design of the shapes of the first opening 52 and the notch 53, it is ensured that the shape of the first opening 52 can undergo large deformation along the central axis of the resin tank 60 without excessively affecting changes of the overall shape of the flexible disc body 51 to ensure the reliability of fixing the top of the resin tank 60.

As shown in FIG. 9, in order to ensure that the first opening 52 can still maintain a circular shape after being deformed along the central axis of the resin tank 60 to reliable fix the top of the resin tank 60, a plurality of notches 53 are evenly distributed circumferentially relative to a center of the first opening 52.

In this embodiment, a plurality of strip-shaped notches 53 are evenly distributed circumferentially relative to the center of the first opening 52, and each notch 53 extends along the radial direction of the first opening 52. The number of notches 53 can be set to 10 to 12, which is not specifically limited here.

As shown in FIG. 9, in order to increase a structural strength of the flexible disc body 51, a reinforcing structure is provided at the surface of the flexible disc body 51 in this embodiment.

In this embodiment, the reinforcing structure can be provided at a first surface of the flexible disc body 51, it can also be provided at a second surface of the flexible disc body 51, or it can be provided at both the first surface of the flexible disc body 51 and the second surface of the flexible disc body 51.

The reinforcing structure is integrally formed on the surface of the flexible disc body 51, and the reinforcing structure may be a boss or a reinforcing rib protruding from the surface of the flexible disc body 51. For example, when the reinforcing structure is a boss, a plurality of bosses can be provided, the plurality of bosses are discretely distributed, and the shape of each boss is cylindrical or cubic. When the reinforcing structure is a rib, a plurality of reinforcing ribs can be provided, and the plurality of reinforcing ribs intersect or are parallel to each other.

As shown in FIG. 9, the reinforcing structure shown in this embodiment includes first reinforcing ribs 54 extending along a circumferential direction relative to the center of the first opening 52; and/or the reinforcing structure includes second reinforcing ribs 55 extending along the radial direction of the first opening 52.

It can be understood that, in this embodiment, the first reinforcing ribs 54 are provided at the surface of the flexible disc body 51. The first reinforcing rib 54 can be arranged in an arc shape extending along the circumferential direction relative to the center of the first opening 52, or can be arranged in an annular shape extending in the circumferential direction relative to the center of the first opening 52. A plurality of first reinforcing ribs 54 may be provided, and radial distances of the plurality of first reinforcing ribs 54 relative to the center of the first opening 52 may be the same or different.

It should be noted that, in this embodiment, when the first reinforcing ribs 54 are provided, it should be ensured that positions of the first reinforcing ribs 54 on the flexible disc body 51 and a position of the notch 53 on the flexible disc body 51 are staggered.

In this embodiment, the second reinforcing ribs 55 can also be provided at the surface of the flexible disc body 51, and lengths of each second reinforcing rib 55 extending along the radial direction of the first opening 52 can be equal to a radial distance between a wall surface of the first opening 52 and a rim of the flexible disc body 51, and it may also be less than the radial distance between the wall surface of the first opening 52 and the rim of the flexible disc body 51. A plurality of second reinforcing ribs 55 may be provided, and the plurality of second reinforcing ribs 55 are evenly distributed circumferentially relative to the center of the first opening 52.

In addition, in this embodiment, the first reinforcing ribs 54 and the second reinforcing ribs 55 shown in the above embodiment can be provided at the surface of the flexible disc body 51. Specific structural forms and layout forms of the first reinforcing ribs 54 and the second reinforcing ribs 55 will not be described one by one.

Based on the solution shown in the above embodiment, the flexible disc body 51 shown in this embodiment is disc-shaped, and the first opening 52 is circular in a natural state and is coaxially arranged with the flexible disc body 51.

As shown in FIG. 9, in order to facilitate the connection between the flexible disc body 51 and the box body 10 of the water softener, in this embodiment, a fixing structure is provided at the flexible disc body 51.

The fixing structure can be a fixing hole, a plug connector, etc. provided at the flexible disc body 51. There is no specific limitation here, as long as it is convenient to connect the flexible disc body 51 to the box body 10 of the water softener.

In some examples, in order to facilitate assembly and disassembly of the flexible disc body 51 and the box body 10, the fixing structure shown in this embodiment includes a plug 56. The plug 56 is provided at the first surface of the flexible disc body 51, approaches the rim of the flexible disc body 51.

It can be understood that, in this embodiment, the plug 56 can be provided at the first surface of the flexible disc body 51, and a radial distance between the plug 56 and the rim of the flexible disc body 51 is less than a predetermined value. In this embodiment, a connection tab extending outward in the radial direction of the flexible disc body 51 can also be provided at the rim of the flexible disc body 51, and the plug 56 is provided at the connecting tab.

In practical applications, in this embodiment, an inner frame 70 is mounted on the box opening 12 of the box body 10. The inner frame 70 is connected to the box body 10. The inner frame 70 is provided with a second opening and a socket. The resin tank 60 is inserted through the second opening, and after the first opening 52 on the flexible disc body 51 sleeves on the top of the resin tank 60, the plug 56 on the flexible disc body 51 can be directly inserted into the socket to conveniently fix the resin tank 60.

The plug 56 is provided at the rim of the flexible disc body 51 to meet a deformation requirement of the flexible disc body 51, and the flexible disc body 51 can fix the top of the resin tank 60.

In some embodiments, a plurality of plugs 56 shown in this embodiment are provided. The plurality of plugs 56 are respectively provided at the first surface of the flexible disc body 51 and are arranged along a circumferential direction relative to the center of the first opening 52.

When the flexible disc body 51 is disc-shaped, the plurality of plugs 56 are sequentially arranged along the rim of the flexible disc body 51. In this embodiment, the plurality of plugs 56 may be further evenly distributed circumferentially relative to the center of the first opening 52.

In order to meet a fixing requirement of the flexible disc body 51, in this embodiment, while the inner frame 70 is provided with a second opening, a plurality of sockets are provided at the inner frame 70. After the first opening 52 on the flexible disc body 51 sleeves on the top of the resin tank 60, the plurality of plugs 56 on the flexible disc body 51 can be directly inserted into the plurality of sockets in a one-to-one correspondence to facilitate the fixing of the resin tank 60. The operation is simple and convenient.

As shown in FIG. 9, the plug 56 shown in this embodiment includes a guide portion 561 and a snap-fit portion 562. The snap-fit portion 562 is provided at a side of the guide portion 561, and a snap-fit opening is formed at a side of the snap-fit portion 562 away from the guide portion 561.

When the plug 56 is in a first state, a gap is formed between a side of the snap-fit portion 562 towards the guide portion 561 and the guide portion 561. When the plug 56 is in a second state, the side of the snap-fit portion 562 towards the guide portion 561 is attached to the guide portion 561.

In this embodiment, by providing the plug 56 having the guide portion 561 and the snap-fit portion 562, the guide portion 561 can guide an entire structure of the plug 56 to be inserted into the socket on the inner frame 70, and the plug 56 and the socket on the inner frame 70 form a buckle connection through the snap-fit portion 562 to prevent the plug 56 from disengaging from the socket.

Before the plug 56 is assembled with the socket, since the guide portion 561 and the snap-fit portion 562 on the plug 56 do not undergo external forces, the plug 56 is in the first state, and a gap is formed between a side of the snap-fit portion 562 towards the guide portion 561 and the guide portion 561.

However, when the plug 56 is inserted into the socket, under a limit of the socket, the snap-fit portion 562 and the guide portion 561 will elastically deform and gradually approach each other until the side of the snap-fit portion 562 towards the guide portion 561 is attached to the guide portion 561. Only after a snap-fit opening on the snap-fit portion 562 is connected to a side wall of the socket on the inner frame 70 by a snap-fit, the snap-fit portion 562 and the guide portion 561 are separated from each other.

Therefore, based on the optimized design of the plug 56, it is ensured that the plug 56 can be stably inserted into the socket on the inner frame 70 without disengagement. Only when the operator exerts a large traction force on the plug 56, the side of the snap-fit portion 562 towards the guide portion 561 is forced to be attached to the guide portion 561, and the plug 56 can be pulled out smoothly from the socket.

Based on the solution shown in the above embodiment, this embodiment further provides a water softener. The water softener includes a box body 10, a resin tank 60 and a fixing disc 50 as shown above. A receiving cavity 11 is provided inside the box body 10. The resin tank 60 is provided in the receiving cavity 11 and connected to the box body 10. The flexible disc body 51 corresponding to the fixing disc 50 is detachably connected to the box body 10, and the first opening 52 on the flexible disc body 51 sleeves on the top of the resin tank 60.

Since the water softener shown in this embodiment includes the fixing disc 50, and the specific structure of the fixing disc 50 refers to the above-mentioned embodiment, the water softener shown in this embodiment includes all the technical solutions of the above-mentioned embodiment. Therefore, it has at least all the beneficial effects brought by all the technical solutions of the above embodiments, and will not be repeated here.

As shown in FIG. 10, the water softener shown in this embodiment further includes an inner frame 70. The inner frame 70 is provided inside the receiving cavity 11. The inner frame 70 is connected to the box body 10. The inner frame 70 is provided with a second opening and a plurality of sockets. The resin tank 60 passes through the second opening, and a plurality of plugs 56 on the flexible disc body 51 are inserted into the plurality of sockets in a one-to-one correspondence.

After the bottom of the resin tank 60 is fixed to the bottom surface of the box body 10 and the top of the resin tank 60 extends from the second opening on the inner frame 70, the operator only needs to sleeve the first opening of the fixing disc 50 on the top of the resin tank 60, insert each plug 56 on the fixing disc 50 into each socket on the inner frame 70 in a one-to-one correspondence, so as to fixedly connect the fixing disc 50 and the inner frame 70, and fix the top of the resin tank 60 based on the fixing disc 50. The operation is simple and convenient.

With the continuous improvement of people's living levels, various water softening products are constantly emerging. When perform installation and maintenance on the water softening products in the related art, it is inconvenient for installation and maintenance due to a small opening angle of the display screen cover. In order to facilitate installation and maintenance, the display screen cover and a middle frame adopt a detachable design. Although this design avoids the display screen cover from affecting installation and maintenance, when the display screen cover is mounted in place, the display screen cover will have a certain degree of movement, which makes a gap between the display screen cover and the middle frame uneven.

Therefore, the present disclosure provides a top cover assembly, which can effectively solve a problem of uneven gaps between a display screen cover body and a middle frame.

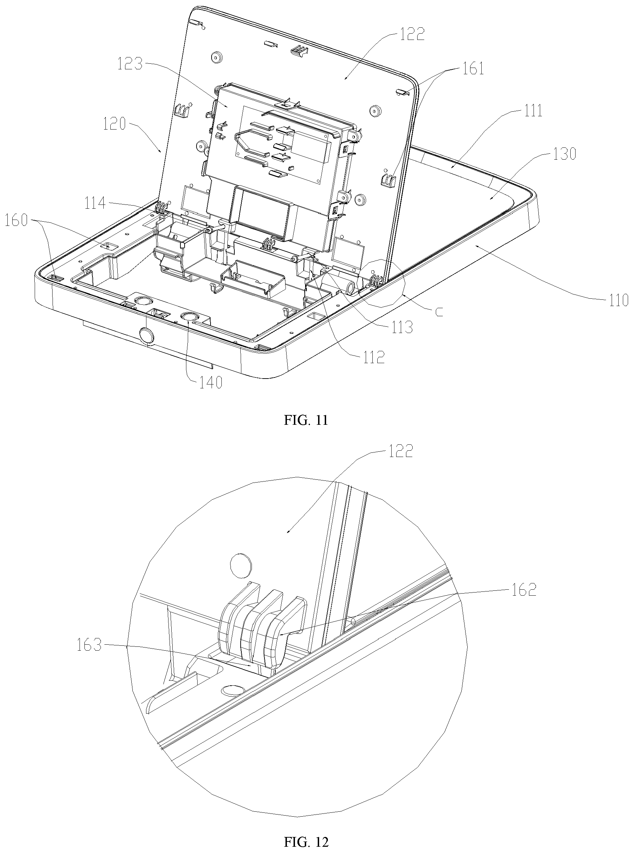

FIG. 11 illustrates a first schematic structural diagram of a top cover assembly of which a first top cover component is in an open state according to an embodiment of the present disclosure. As shown in FIG. 11, the top cover assembly includes a first frame body 110 and a first top cover component 120. The first frame body 110 is provided with a first opening and a first limit portion 160. The first top cover component 120 is connected to the first frame body 110. The first top cover component 120 is provided with a second limit portion 161. The first top cover component 120 is switchable between an open state and a closed state. In the closed state, the first top cover component 120 covers the first opening, and the first limit portion 160 is limitedly matched with the second limit portion 161 in a first direction a and a second direction b in a plane where the first top cover component 120 is located. In the open state, an opening side of the first top cover component 120 is away from the first opening, and the first limit portion 160 is separated from the second limit portion 161.

According to the top cover assembly of the embodiment of the present disclosure, by providing the first limit portion 160 on the first frame body 110, and providing the second limit portion 161 on the first top cover component 120, in the closed state, the first limit portion 160 is limitedly matched with the second limit portion 161 at the first direction a and the second direction b in the plane where the first top cover component 120 is located to prevent the first top cover component 120 in the closed state from moving along the first direction a or the second direction b in the plane where the first top cover component 120 is located, which causes the uneven gap between the first top cover component 120 and the first frame body 110.

It can be understood that, as shown in FIG. 11 and FIG. 14, the first limit portion 160 includes a plurality of first limit holes, the plurality of first limit holes are provided at a side of the first frame body 110 towards the first top cover component 120 at intervals, and the first limit holes are rectangular holes. The second limit portion 161 includes a plurality of limit blocks 114. The limit blocks 114 are located on a side of the first top cover component 120 in the closed state towards the first frame body 110. That is, the limit blocks 114 are located on a first side of a first housing 122. The plurality of limit blocks 114 are arranged at intervals, the limit blocks 114 are in one-to-one correspondence with the first limit holes, and the limit blocks 114 are integrally formed with the first housing 122. In the closed state, the limit block 114 is embedded in the corresponding first limit hole. Since the first limit portion 160 is limitedly matched with the second limit portion 161 at the first direction a and the second direction b in the plane where the first top cover component 120 is located, the first top cover component 120 cannot move, and the gap between the top cover component 120 and the first frame body 110 is fixed and even.

It should be noted that, the second limit portion 161 is not limited to the limit block 114, and may also be a snap tongue, or a combination of the limit block 114 and the snap tongue. When the first housing 122 has a rectangular plate structure, the first direction a and the second direction b are perpendicular. The first direction a is a length direction of the first frame body 110, and the second direction b is a width direction of the first frame body 110. The first direction a may not be perpendicular to the second direction b. In this case, the first housing 122 may be circular, elliptical, or other shapes.

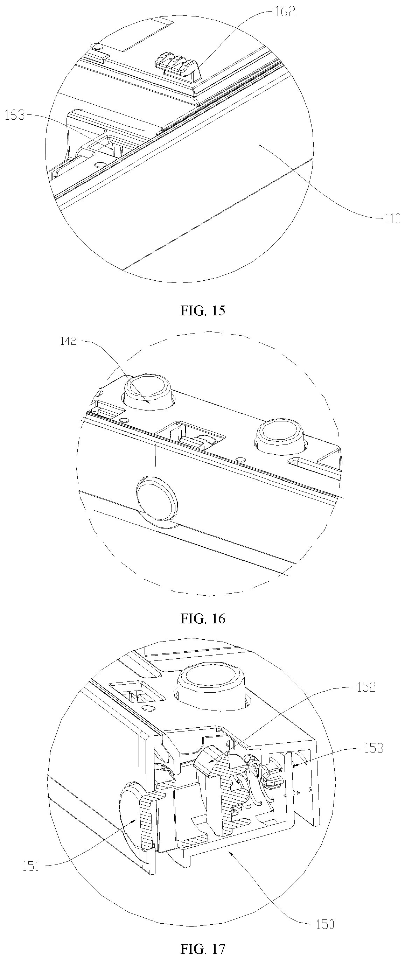

It can be understood that, FIG. 12 is a partial enlarged schematic structural diagram of C in FIG. 11, and FIG. 15 is a partial enlarged schematic structural diagram of D in FIG. 14. As shown in FIG. 11, FIG. 12, FIG. 14 and FIG. 15, the first top cover component 120 is provided with a third limit portion 162, and the first frame body 110 is provided with a fourth limit portion 163 corresponding to the third limit portion 162. In the closed state, the first limit portion 160 is limitedly matched with the third limit portion 162 at a direction perpendicular to the plane where the first top cover component 120 is located. Since a bottom of the first top cover component 120 is supported by the first frame body 110, the direction perpendicular to the plane where the first top cover component 120 is located is a vertical upward direction. Since the third limit portion 162 is limitedly matched with the fourth limit portion 163, a side of the first top cover component 120 opposite to the opening side cannot move upwards.

It can be understood that, as shown in FIG. 11, FIG. 12, FIG. 14 and FIG. 15, the third limit portion 162 is located on the side of the first top cover component 120 opposite to the opening side, the third limit portion 162 includes three hook-shaped structures, and the hook-shaped structures are integrally formed with the first housing 122. The fourth limit portion 163 includes three second limit holes, and the hook-shaped structures are in one-to-one correspondence with the second limit holes. In the closed state, the hook-shaped structures are embedded in the second limit holes, and connected with an inner wall of the second limit holes by a snap-fit. Since the opening side of the first top cover component 120 locks the first top cover component 120 through the locking component 150, the side of the first top cover component 120 opposite to the opening side is limitedly matched with the fourth limit portion 163 through the third limit portion 162, and the first top cover component 120 is fixed.

It can be understood that, the top cover assembly further includes a second top cover component 130. The second top cover component 130 is detachably connected to the first frame body 110. The first frame body 110 is provided with a second opening, and the second opening is located at a side of the first opening. The second top cover component 130 is switchable between a closed position and an open position. In the closed position, the second top cover component 130 covers the second opening. In the open position, the second top cover component 130 is away from the second opening.

It should be noted that, the second top cover component 130 and the first frame body 110 can be detachably connected through a second crank arm 164 or a flexible connector, and can also be connected through other detachable connection modes.

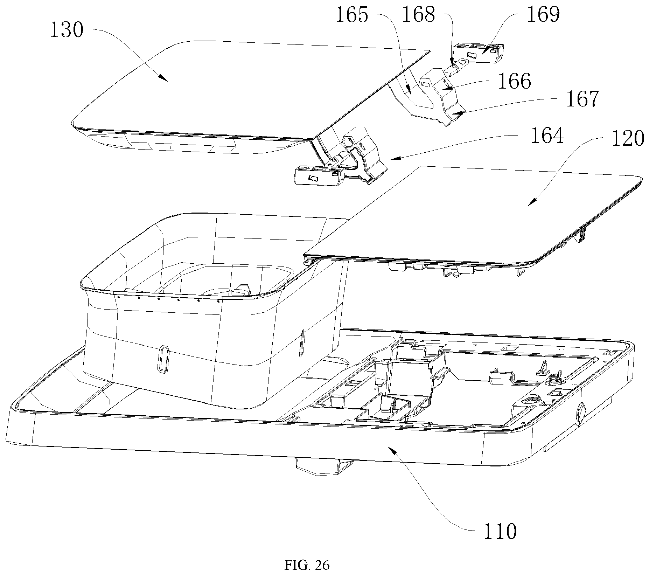

It can be understood that, FIG. 26 is a schematic structural diagram of a top cover assembly according to an embodiment of the present disclosure. As shown in FIG. 26, the second top cover component 130 is connected to the first frame body 110 through a crank arm component. A flip angle of the second cover component 130 relative to the first frame body 110 is greater than 90°. By making the flip angle of the second top cover component 130 relative to the first frame body 110 to be greater than 90°, the water softening device can be maintained.

It can be understood that, as shown in FIG. 26, the crank arm component includes a second crank arm 164, a first end of the second crank arm 164 is connected to the second top cover component 130, and a second end of the second crank arm 164 is rotatably matched with and detachably connected to the first frame body 110. By detachably connecting the second end of the second crank arm 164 to the first frame body 110, the second end of the second crank arm 164 can be separated from the first frame body 110 when necessary, and the second top cover component 130 is conveniently mounted and disassembled.

It can be understood that, as shown in FIG. 26, the second crank arm 164 includes a second long-arm segment 165 and a second short-arm segment 166. The second long-arm segment 165 is arc-shaped, and the second short-arm segment 166 is linear. A first end of the second long-arm segment 165 is connected to the second top cover component 130, a second end of the second long-arm segment 165 is connected to a first end of the second short-arm segment 166, and a second end of the second short-arm segment 166 is rotatably matched with the first frame body 110. A distance between the second end of the second short-arm segment 166 and the first end of the second long-arm segment 165 is shorter than a distance between the first end of the second short-arm segment 166 and the first end of the second long-arm segment 165. Since the second long-arm segment 165 and the second short-arm segment 166 form an arc-shaped structure, when the second top cover component 130 is in an open position, a side of the first top cover component 120 opposite to the opening side is located between the second long-arm segment 165 and the second short-arm segment 166. The second crank arm 164 cannot be blocked by the side of the first top cover component 120 opposite to the opening side, and the second top cover component 130 can be opened at a larger angle.

It can be understood that, as shown in FIG. 26, the second crank arm 164 is provided with a second stop portion 167, and the second stop portion 167 is integrally formed with the second crank arm 164. The first frame body 110 is provided with an abut portion (not shown). In the closed position, the second stop portion 167 is separated from the abut portion. In the open position, the second stop portion 167 abuts against the abut portion. By matching the second stop portion 167 with the abut portion, the second top cover component 130 can be supported in the open position, and stability of the second top cover component 130 in the open position can be improved.

It can be understood that, as shown in FIG. 26, the second stop portion 167 is provided outside the second long-arm segment 165 and close to the second end of the second long-arm segment 165.

It can be understood that, as shown in FIG. 26, the crank arm component further includes a second damping shaft 168. An end of the second damping shaft 168 is insertedly connected to the second end of the second short-arm segment 166. Another end of the second damping shaft 168 is insertedly connected to the first frame body 110.

It should be noted that, the connection mode between the second damping shaft 168, the second short-arm segment 166 and the first frame body 110 is not limited to plug connection, and can also be connected by buckles, pins or other connection modes.

It can be understood that, as shown in FIG. 26, the crank arm component further includes a fixing seat 169. The first frame body 110 is provided with a mounting slot. The fixing seat 169 is fixed to the mounting slot through screws. The fixing seat 169 is provided with a square hole. Another end of the second damping shaft 168 is plugged into the square holes. Similarly, the second end of the second short-arm segment 166 is also provided with a square hole, and the end of the second damping shaft 168 is plugged into the square hole at the second end of the second short-arm segment 166.

It can be understood that, the first top cover component 120 is connected to the first frame body 110 through a flexible member 112, and the first top cover component 120 is switchable between an open state and a closed state. The second top cover component 130 is connected to the first frame body 110 and is located at a side of the first opening. In the closed state, the first top cover component 120 covers the first opening. In the open state, the first top cover component 120 is located above the second top cover component 130, and an included angle between the first top cover component 120 and the second top cover component 130 is less than a predetermined angle.

According to the top cover assembly of the embodiment of the present disclosure, by connecting the first top cover component 120 to the first frame body 110 through the flexible member, in the open state, the first top cover component 120 is located above the second top cover component 130, and the included angle between the first top cover component 130 and the second top cover component 130 is less than the predetermined angle. A large opening angle can be formed between the first top cover component 120 and the first opening, which will not affect the installation and maintenance of the water softener. There is no need to disassemble the first top cover component 120, which improves the efficiency of installation and maintenance of water softening device, improves user experience, and enhances product competitiveness.

It can be understood that, an end of the flexible member 112 is detachably connected to the first frame body 110, and another end of the flexible member 112 is fixedly connected to the first top cover component 120.

It can be understood that, an end of the flexible member 112 is fixedly connected to the first frame body 110, and another end of the flexible member 112 is detachably connected to the first top cover component 120.

It can be understood that, an end of the flexible member 112 is detachably connected to the first frame body 110, and another end of the flexible member 112 is detachably connected to the first top cover component 120.

It should be noted that, the detachable connection mode here can be a snap connection mode or a buckle connection mode.

It can be understood that, as shown in FIG. 11, a first side of the first housing 122 and a middle frame of the first frame body 110 are both provided with snap slots 113, and two ends of the flexible member 112 are respectively connected to corresponding snap slots 113 by a snap-fit.

It should be noted that, the snap slot 113 can also be provided only on the first side of the first housing 122 or the middle frame of the first frame body 110.

It can be understood that, a limit block 114 is provided at an end of the flexible member 112 snapped to the snap slot 113. The limit block 114 is limitedly matched with the snap slot 113. A width of the snap slot 113 is less than a width of the limit block 114, and the limit block 114 is unable to pass through the snap slot 113. It is convenient to install and disassemble the first housing 122 by matching the snap slot 113 with the flexible member 112 by a snap-fit.

It can be understood that, a size of the first opening is 240 mm * 160 mm, and the predetermined angle is 0°. That is, in the open state, the first top cover component 120 is attached to an upper surface of the second top cover component 130. The opening angle of the first top cover component 120 reaches 180°.

It can be understood that, a limit portion is formed on the side of the second top cover component 130 away from the first opening or a side of the first frame body 110 away from the first opening. In the closed state, the first top cover component 120 covers the first opening. In the open state, the first top cover component 120 is located above the second top cover component 130, and is limitedly matched with the limit portion.

According to the top cover assembly of the embodiment of the present disclosure, by providing the limit portion on the side of the second top cover component 130 away from the first opening or the side of the first frame body 110 away from the first opening, when the first top cover component 120 is in the open state, the first top cover component 120 is located above the second top cover component 130 and is limitedly matched with the first top cover component 120 through the limit portion. The first cover component 120 is effectively prevented from sliding, and the user experience and product competitiveness are enhanced.

It can be understood that, the limit portion is a step 111 formed at a side of the first frame body 110 away from the first opening. In the open state, the first top cover component 120 abuts against the step 111. Since a height of the side of the first frame body 110 away from the first opening is larger than a height of an upper surface of the second top cover component 130, and the step 111 is formed at a part of the first frame body 110 on the side away from the first opening higher than the upper surface of the second top cover component 130.

It should be noted that, the formation mode of the step 111 is not limited to the above mode. When the height of the side of the first frame body 110 away from the first opening is the same as the height of the upper surface of the second top cover component 130, an upwardly raised step 111 may be formed on the side of the first frame body 110 away from the first opening. The steps 111 may be continuous or may be arranged at intervals.

It can be understood that, the limit portion is a raised edge 134 formed at the side of the second top cover component 130 away from the first opening. In the open state, the first top cover component 120 abuts against the raised edge 134. The raised edge 134 is formed at the side of the first housing 122 away from the first opening. The raised edge 134 is integrally formed with the first housing 122. The raised edge 134 may be continuous, or may be consisted of a plurality of protrusions arranged at intervals.

FIG. 13 illustrates a first schematic structural diagram of a top cover assembly of which a first top cover component is in a closed state according to the embodiment of the present disclosure. FIG. 14 illustrates a second schematic structural diagram of a top cover assembly of which a first top cover component is in an open state according to the embodiment of the present disclosure. FIG. 16 is a partial enlarged schematic structural diagram of A in FIG. 14. As shown in FIG. 11, FIG. 13, FIG. 14 and FIG. 16, the top cover assembly further includes an ejector rod component 140. The ejector rod component 140 is switchable between an extended state and a retracted state. In the retracted state, the first top cover component 120 covers the first opening. In the extended state, the ejector rod component 140 abuts against the first frame body 110 or the first top cover component 120, and an opening gap is formed between the opening side of the first top cover component 120 and the first frame body 110.

According to the top cover assembly of the embodiment of the present disclosure, by providing the ejector rod component 140, when the first top cover component 120 needs to be opened, the ejector rod component 140 is in an extended state, the ejector rod component 140 abuts against the first frame body 110 or the first top cover component 120, and an opening gap is formed between the opening side of the first top cover component 120 and the first frame body 110. The opening gap can facilitate a user to open the first top cover component 120 by hand, thereby enhancing the user experience and improving product competitiveness.

It can be understood that, as shown in FIG. 14, the first frame body 110 is a rectangular frame body, a middle frame is formed in the middle of the first frame body 110, a first opening is formed on a side of the middle frame, and a second opening is formed on another side of the middle frame. The second opening is covered by the second top cover component 130. When the first top cover component 120 is in a closed state, an upper edge of the first frame body 110 is flush with the opening side of the first top cover component 120, and the gap between them is small, and it is inconvenient to open the first top cover component 120 by hand. Therefore, the ejector rod component 140 needs to be provided. An opening gap is formed between the opening side of the first top cover component 120 and the first frame body 110 by the ejector rod component 140, which conveniently opens the first top cover component 120.

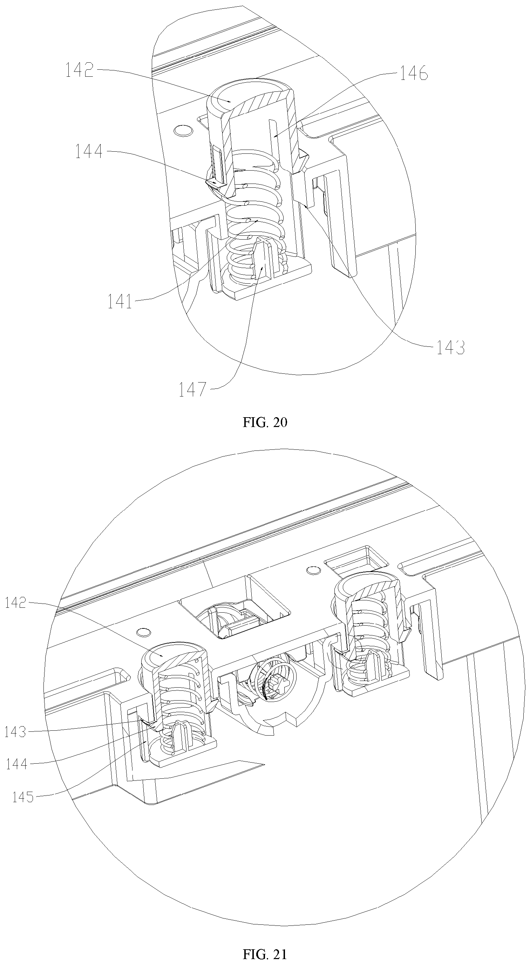

It can be understood that, FIG. 20 illustrates a first cross-sectional schematic structural diagram of an ejector rod component 140 according to an embodiment of the present disclosure, and FIG. 21 illustrates a second cross-sectional schematic structural diagram of an ejector rod component 140 according to an embodiment of the present disclosure. As shown in FIG. 14, FIG. 20 and FIG. 21, two first mounting holes are formed on a side of the first frame body 110 towards the first top cover component 120. The top cover assembly includes two ejector rod components 140. The ejector rod components 140 are mounted in the first mounting holes in one-to-one correspondence.

The ejector rod component 140 includes a first elastic member 141 and an ejector rod 142. The first elastic member 141 is provided inside a corresponding first mounting hole. The first elastic member 141 is a compression spring. A first end of the first elastic member 141 abuts against a bottom wall of the first mounting hole. The ejector rod 142 is provided inside the first mounting hole, and the ejector rod 142 abuts against a second end of the first elastic member 141. In the retracted state, the ejector rod 142 is retracted into the first mounting hole, and the first elastic member 141 is in a first compressed state. In the extended state, the ejector rod 142 extends from the first mounting hole and abuts against the first top cover component 120, and the first elastic member 141 is in a second compressed state.

It should be noted that, in the retracted state, the ejector rod 142 may or may not abut against the first top cover component 120. When the top cover assembly is provided with the locking component 150, the ejector rod 142 abuts against the first top cover component 120. Since the locking component 150 locks the first top cover component 120, the first top cover component 120 will not be ejected by the ejector rod 142. When the top cover assembly is not provided with the locking component 150, the ejector rod component 140 may further include a locking mechanism. In the retracted state, the ejector rod 142 is locked by the locking mechanism, the ejector rod 142 is locked in the first mounting hole, and the ejector rod 142 will not abut against the first top cover component 120. In the extended state, the locking mechanism unlocks the ejector rod 142, and the ejector rod 142 extends out of the first mounting hole and abuts against the first top cover component 120.

It should be noted that, a number of ejector rod components 140 is not limited to two, it may be one, it may also be three or more.

It can be understood that, the first mounting hole is formed on the opening side of the first top cover component 120, and the first elastic member 141 is provided inside the first mounting hole. The first elastic member 141 is a compression spring. A first end of the first elastic member 141 abuts against the bottom wall of the first mounting hole. The ejector rod 142 is provided inside the first mounting hole, and the ejector rod 142 abuts against the second end of the first elastic member 141. In the retracted state, the ejector rod 142 is retracted into the first mounting hole, and the first elastic member 141 is in the first compressed state. In the extended state, the ejector rod 142 extends out of the first mounting hole and abuts against the first frame body 110, and the first elastic member 141 is in the second compressed state.

It should be noted that, a compression amplitude of the first elastic member 141 when it is in the first compressed state is greater than a compression amplitude when it is in the second compressed state. Mounting the ejector rod component 140 on the opening side of the first top cover component 120 has the same function as mounting it on the first frame body 110, and the specific working principle will not be described in detail.

It can be understood that, a mounting hole limit portion 143 is formed at a side wall of the first mounting hole, and an ejector rod limit portion 144 is formed at the ejector rod 142. In the extended state, the ejector rod limit portion 144 abuts against the mounting hole limit portion 143. In the retracted state, the ejector rod limit portion 144 is separated from the mounting hole limit portion 143. By providing the mounting hole limit portion 143 and the ejector rod limit portion 144, the first elastic member 141 is prevented from completely ejecting the ejector rod 142 out of the first mounting hole.

It can be understood that, as shown in FIG. 20 and FIG. 21, the mounting hole limit portion 143 is a first snap tongue provided at a side wall of the ejector rod 142, and the first snap tongue is integrally formed with the ejector rod 142. The side wall of the first mounting hole is provided with a chute 145 extending along a depth direction of the first mounting hole, and the first snap tongue is slidably matched with the corresponding chute 145. Through the slidably matching of the first snap tongue and the corresponding chute 145, in addition to guiding the ejector rod 142, it can also play a limiting role on the ejector rod 142, so that the ejector rod 142 can only reciprocate along the depth direction of the first mounting hole within a predetermined range without axial rotation. The ejector rod limit portion 144 is a slot wall at an end of the chute 145 away from a bottom wall of the first mounting hole. In the extended state, the first snap tongue abuts against the slot wall at the end of the chute 145 away from the bottom wall of the first mounting hole to limit the position of the ejector rod 142.

It can be understood that, as shown in FIG. 20 and FIG. 21, four strip-shaped separation slots 146 extending along the depth direction of the first mounting hole are formed on the ejector rod 142, and two first snap tongues are symmetrically provided at side walls of the ejector rod 142. Two sides of each first snap tongue are provided with one strip-shaped separation slot 146 respectively. By providing strip-shaped separation slots 146 on two sides of the first snap tongue, only an end of the first snap tongue is connected to the side wall of the ejector rod 142, so that the first snap tongue has a certain elasticity in a radial direction of the ejector rod 142, which facilitates the installation and disassembly of the ejector rod 142.

It can be understood that, as shown in FIG. 20 and FIG. 21, a first positioning post 147 is provided at the bottom wall of the first mounting hole, and the first end of the first elastic member 141 sleeves on an outer periphery of the first positioning post 147. An end of the ejector rod 142 towards the first positioning post 147 is hollow. An end of the ejector rod 142 towards the first positioning post 147 sleeves on the second end of the first elastic member 141. By providing the first positioning post 147, the first elastic member 141 can be positioned to prevent the first end of the first elastic member 141 from deflecting during the squeeze process.

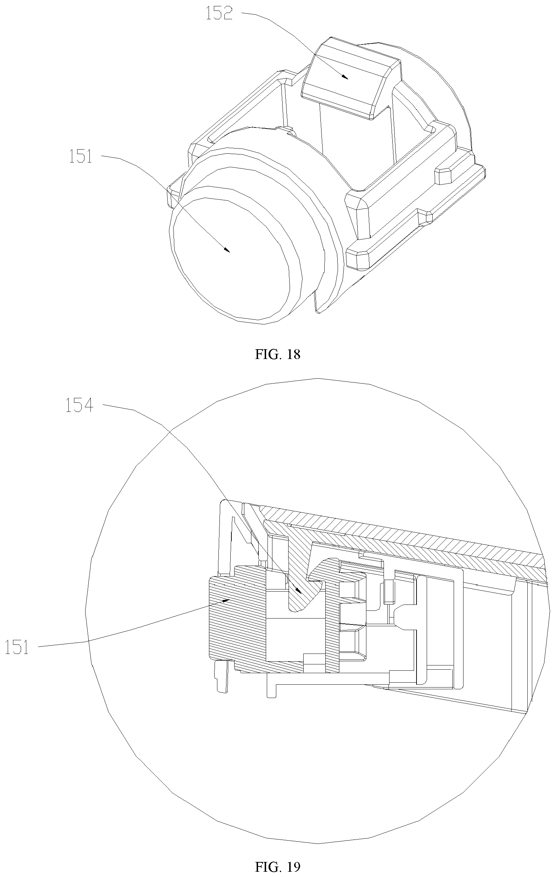

It can be understood that, FIG. 17 illustrates a first cross-sectional schematic structural diagram of a locking component 150 according to an embodiment of the present disclosure, FIG. 18 illustrates a three-dimensional schematic structural diagram of a button 151 according to an embodiment of the present disclosure, and FIG. 19 illustrates a second cross-sectional schematic structural diagram of a locking component 150 according to an embodiment of the present disclosure. As shown in FIG. 17, FIG. 18 and FIG. 19, The top cover assembly further includes a locking component 150. The locking component 150 is switchable between a locked state and an unlocked state. In the unlocked state, the first top cover component 120 is locked to the first frame body 110 through the locking component 150. In the unlocked state, the locking component 150 unlocks the first top cover component 120.

It can be understood that, as shown in FIG. 17, FIG. 18 and FIG. 19, the locking component 150 includes a button 151, a second elastic member 153 and a second snap tongue 154. A side wall of the first frame body 110 is provided with a second mounting hole. A side of the first frame body 110 towards the first top cover component 120 is provided with a through hole communicating with the second mounting hole. The through hole is used for allowing the second snap tongue 154 to enter and exit the second mounting hole.

The button 151 is provided inside the second mounting hole. The button 151 is provided with a button limit portion 152. The button limit portion 152 is matched with the second snap tongue 154 by a snap-fit. The second elastic member 153 is provided inside the second mounting hole. A first end of the second elastic member 153 abuts against a bottom wall of the second mounting hole. A second end of the second elastic member 153 abuts against the button 151. The snap tongue 154 is provided at the opening side of the first top cover component 120. In the locked state, the button 151 is retracted into the second mounting hole, and the second snap tongue 154 is matched with the button limit portion 152 by a snap-fit. In the extended state, the button 151 extends out of the second mounting hole, and the second snap tongue 154 is separated from the button limit portion 152.

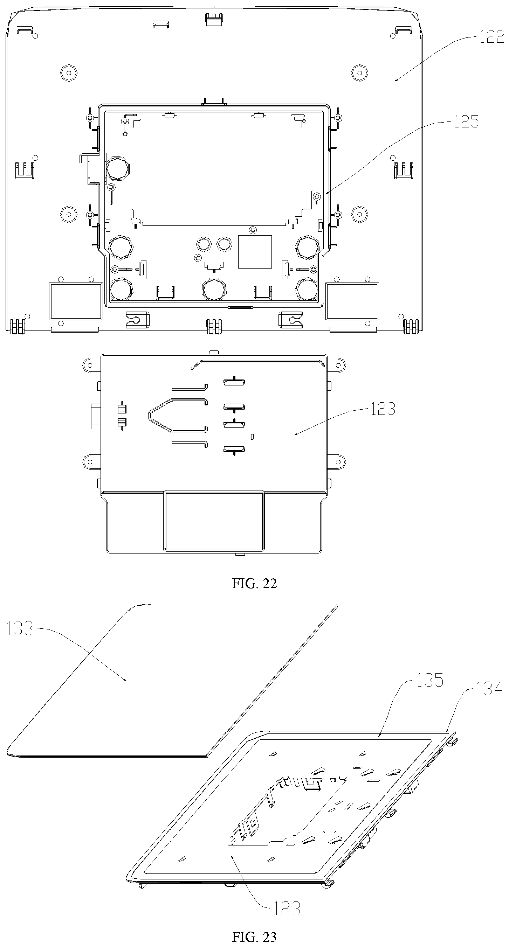

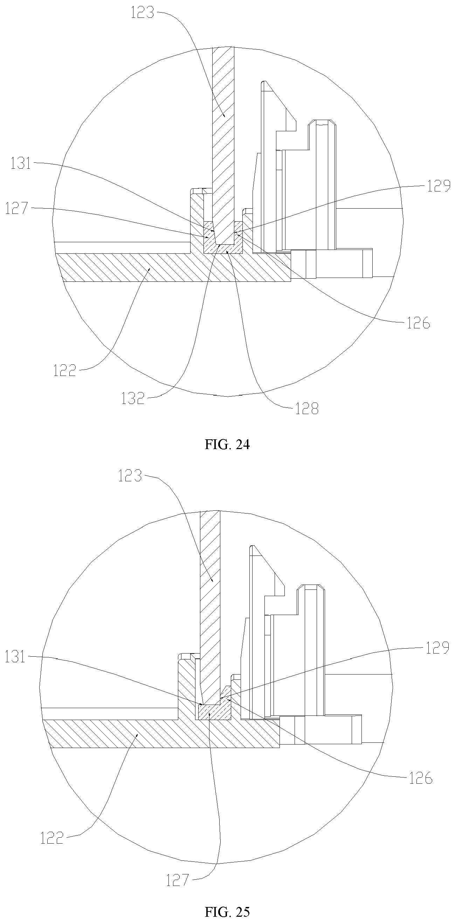

FIG. 22 is an exploded schematic structural diagram of a top cover component according to an embodiment of the present disclosure. FIG. 24 is a schematic structural diagram of an assembly relationship between a first seal and a side edge of an opening according to an embodiment of the present disclosure. FIG. 25 is a schematic structural diagram of an assembly relationship between a first seal and a side edge of an opening according to another embodiment of the present disclosure. As shown in FIG. 11, FIG. 22, FIG. 24 and FIG. 25, the first top cover component includes a first housing 122, a second housing 123 and a first seal 124. The second housing 123 is provided on a first side of the first housing 122, a side of the second housing 123 towards the first housing 122 is opened. The first seal 124 is formed with at least two sealing surfaces. The first seal 124 is provided on the first side of the first housing 122, and a side of the opening is hermetically matched with a sealing surface of the first seal 124. Or, the first seal 124 is provided on the side of the opening, and the first side of the first housing 122 is hermetically matched with the sealing surface of the first seal 124.

By forming at least two sealing surfaces on the first seal 124, and hermetically matching the side of the opening or the first side of the first housing 122 with the sealing surface of the first seal 124, at least two sealing structures can be formed. Even if one of the sealing structures fails, the other sealing structures can still play a sealing role, which effectively improves the sealing performance of the first top cover component and avoids short circuit problems between the display panel and the electronic control board. Since one seal is configured to form at least two sealing surfaces, compared with using a plurality of seals for sealing, the number of seals is effectively reduced, and the structure of the first top cover component is simplified.

It can be understood that, the first top cover component 120 is connected to the first frame body 110 through the flexible member 112, and the first top cover component 120 is switchable between the open state and the closed state. In the open state, the first top cover component 120 is located above the second top cover component, and the included angle between the first top cover component 120 and the second top cover component is less than the predetermined angle.

It can be understood that, the first housing 122 has a rectangular plate structure, the first housing 122 is provided with a mounting opening, and a second side of the first housing 122 is the opening side of the first top cover component. The first side of the first housing 122 is opposite to the second side of the first housing 122, an end of the flexible member 112 is connected to the first side of the first housing 122, and another end of the flexible member 112 is connected to the first frame body 110. The first housing 122 is switchable between the open state and the closed state. The flexible member 112 is a drawstring, and the first housing 122 is connected to the first frame body 110 by the flexible member 112, so that the first housing 122 can be opened at a larger angle to facilitate the installation, maintenance and debugging of the water softening device.

It can be understood that, the first side of the first housing 122 is provided with a plurality of fasteners at intervals, and a side of the second housing 123 is provided with a plurality of snap tongues corresponding to the fasteners, and the snap tongues are connected to the fasteners by a snap-fit in one-to-one correspondence. By matching the snap tongues and the fasteners, the installation and disassembly of the second housing 123 can be facilitated. In order to further strengthen the connection between the second housing 123 and the first housing 122, a plurality of screw holes are provided at intervals on the side of the second housing 123. The second housing 123 is connected to the second housing 123 through screws in the screw holes. By using the screws and the fasteners to fix the second housing 123, the second housing 123 and the first seal 124 can be closely attached, thereby improving the sealing performance between the second housing 123 and the first housing 122.

It can be understood that, as shown in FIG. 11 and FIG. 22, a receiving cavity is formed inside the second housing 123, and the receiving cavity is configured to mount a display assembly. The display assembly includes a control circuit board and a display screen, and the control circuit board is electrically connected to the display screen. The first housing 122 is provided with a mounting opening, the size of the mounting opening is less than the size of the opening, and the display screen is embedded in the mounting opening.

It can be understood that, as shown in FIG. 22, a positioner 125 is provided at the first side of the first housing 122, and the first seal 124 is provided inside the positioner 125. The positioner 125 is configured to fix the first seal 124. The positioner 125 is arranged around an outer periphery of the mounting opening. The shape of the positioner 125 is the same as the shape of the opening. The positioner 125 can be circular or square, which is specifically determined based on the shape of the opening.

It should be noted that, the positioner 125 can be provided on the first side of the first housing 122, or can also be provided on the side of the opening. When the positioner 125 is provided on the side of the opening, a round of protruding ridges is provided at the first side of the first housing 122, and the shape of the protruding ridge is the same as the shape of the positioner 125.

It can be understood that, as shown in FIG. 22, the positioner 125 is a positioning slot provided at the first side of the first housing 122. The positioning slot is integrally formed with the first housing 122, and the first seal 124 is snapped in the positioning slot. After the second housing 123 is mounted in place, the first seal 124 is not only hermetically matched with the side of the opening, but also hermetically matched with at least one slot wall and slot bottom of the positioning slot. By snapping the first seal 124 in the positioning slot, the first seal 124 can be mounted and disassembled conveniently, and the positioning slot can limit the first seal 124 during use, preventing the first seal 124 from displacing.

It should be noted that, the heights of the two slot walls of the positioning slot may be the same or different. The specific structural form of the positioner 125 is not limited to the positioning slot. The positioner 125 may also be a round of blocking sheets, the blocking sheets are arranged around the outer periphery of the mounting opening, and the blocking sheets are integrally formed with the first housing 122. The first seal 124 is located inside the blocking sheet, that is, the first seal 124 is located on a side of the blocking sheet towards the mounting opening. After the second housing 123 is mounted in place, the first seal 124 not only hermetically matched with the side of the opening, but also hermetically matched with the inside of the blocking sheet and the first side of the first housing 122.

It can be understood that, as shown in FIG. 25, the first seal 124 is snapped in the positioning slot. The first seal 124 is formed with two sealing surfaces. The first seal 124 includes a first sealing portion 126 and a second sealing portion 127. A side of the second sealing portion 127 is connected to a side of the first sealing portion 126. The second sealing portion 127 is perpendicular to the first sealing portion 126. A cross section of the first seal 124 is L-shaped. A first sealing surface 129 is formed on a side of the first sealing portion 126 towards the side of the opening, that is, the first sealing surface 129 is formed on a left side of the first sealing portion 126 as shown in FIG. 25. A second sealing surface 131 is formed on a side of the second sealing portion 127 towards the side of the opening, that is, the second sealing surface 131 is formed on an upper surface of the second sealing portion 127 as shown in FIG. 25. When the second housing 123 is mounted in place, the right side of the side of the second housing 123 squeezes the first sealing surface 129 and is hermetically matched with the first sealing surface 129, and the right side of the first sealing portion 126 is hermetically matched with the slot wall. A lower surface of the side of the second housing 123 squeezes the second sealing surface 131 and is hermetically matched with the second sealing surface 131. A lower surface of the second sealing portion 127 is hermetically matched with the slot bottom. Since two sealing structures are formed, the sealing performance of the first top cover component is effectively improved.

It can be understood that, the positioning slot is provided at the side of the opening, and a slot opening of the positioning slot faces the first side of the first housing 122. A round of protruding ridges are provided at the first side of the first housing 122, and the first seal 124 is snapped in the positioning slot, the structural form of the first seal 124 is the same as the above-mentioned embodiment. The first sealing surface 129 is formed at a side of the first sealing portion 126 towards the protruding ridge, and a second sealing surface 131 is formed at a side of the second sealing portion 127 towards the protruding ridge. Similarly, when the second housing 123 is mounted in place, the protruding ridge squeezes the first sealing surface 129, and is hermetically matched with the first sealing surface 129. The side of the first sealing portion 126 away from the first sealing surface 129 is hermetically matched with the slot wall. The protruding ridges further squeeze the second sealing surface 131, and is hermetically matched with the second sealing surface 131. The side of the second sealing portion 127 away from the second sealing surface 131 is hermetically matched with the slot bottom.

It can be understood that, the first sealing surface 129 is an inclined surface, and the first sealing portion 126 gradually becomes thicker along a direction in which the first sealing portion 126 approaches the second sealing portion 127. By providing the first sealing surface 129 as an inclined surface, during the installation of the second housing 123, the inclined surface can guide the side of the opening, making it easier to mount the side of the opening in place.

It can be understood that, the side of the opening towards the first sealing surface 129 is an inclined surface, and the side of the opening away from the first sealing surface 129 is a flat surface. The side of the opening has wedge-shaped cross-sectional area. When the side of the opening is first embedded in the positioning slot, since the thickness of the side is thin, the side can be easily embedded between the first sealing surface 129 and the slot wall of the positioning slot. As a depth of the side wall embedded in the positioning slot increases, the thickness of the side becomes thicker and thicker, and the side and the first sealing surface 129 is matched more closely, which effectively improves the sealing performance of the first top cover component.

It can be understood that, as shown in FIG. 24, the first seal 124 is snapped in the positioning slot. The first seal 124 is formed with three sealing surfaces. The first seal 124 includes a first sealing portion 126, a second sealing portion 127 and a third sealing portion 128. The second sealing portion 127 is opposite to the first sealing portion 126. The second sealing portion 127 is parallel to the first sealing portion 126. A side of the third sealing portion 128 is connected to the first sealing portion 126, and another side of the third sealing portion 128 is connected to the second sealing portion 127. The first sealing portion 126, the second sealing portion 127 and the third sealing portion 128 form a seal with a slot-shaped cross section.

As shown in FIG. 24, the side of the opening is embedded between the first sealing portion 126 and the second sealing portion 127. The first sealing surface 129 is formed at a side of the first sealing portion 126 towards the side of the opening, that is, the first sealing surface 129 is formed at a left side of the portion 126.

The second sealing surface 131 is formed at a side of the second sealing portion 127 towards the side of the opening, that is, the second sealing surface 131 is formed at the right side of the second sealing portion 127. A third sealing surface 132 is formed at the side of the third sealing portion 128 towards the opening side, that is, the third sealing surface 132 is formed at an upper surface of the third sealing portion 128.

The first sealing surface 129 is hermetically matched with the right side of the side of the second housing 123, and the side of the first sealing portion 126 away from the first sealing surface 129 is hermetically matched with a right slot wall. The second sealing surface 131 is hermetically matched with the left side of the side of the second housing 123. The side of the second sealing portion 127 away from the second sealing surface 131 is hermetically matched with a left slot wall. The third sealing surface 132 is hermetically matched with a lower surface of the side of the second housing 123, and a lower surface of the third sealing portion 128 is hermetically matched with the slot bottom.

It can be understood that, the positioning slot is provided at the side of the opening, the first side of the first housing 122 is provided with a round of protruding ridges, the first seal 124 is snapped in the positioning slot, and the structure of the first seal 124 is the same as that of the previous embodiment. The protruding ridge is embedded between the first sealing portion 126 and the second sealing portion 127. The first sealing surface 129 is formed at a side of the first sealing portion 126 towards the protruding ridge forms. The second sealing surface 131 is formed at a side of the second sealing portion 127 towards the protruding ridge. The third sealing surface 132 is formed at a side of the third sealing portion 128 towards the protruding ridge. The protruding ridges are hermetically matched with the three sealing surfaces respectively.

It can be understood that, the first sealing surface 129 is an inclined surface, the second sealing surface 131 is a flat surface, and a distance between the first sealing surface 129 and the second sealing surface 131 gradually decreases along a direction in which the first sealing portion 126 approaches the third sealing portion 128. A width of a slot of a slot-shaped seal is larger, and a width of a slot bottom of a slot-shaped seal is smaller, so as to facilitate embedding the side of the opening or protruding ridges into the slot-shaped seal.

It can be understood that, as shown in FIG. 24, the second sealing surface 131 is an inclined surface, the first sealing surface 129 is a flat surface, and the distance between the first sealing surface 129 and the second sealing surface 131 gradually decreases along the direction in which the first sealing portion 126 approaches the third sealing portion 128.

It can be understood that, both the first sealing surface 129 and the second sealing surface 131 are inclined surfaces, and the distance between the first sealing surface 129 and the distance between the first sealing surface 129 and the second sealing surface 131 gradually decreases along the direction in which the first sealing portion 126 approaches the third sealing portion 128.

It can be understood that, in order to increase the hermetically-matched area between the side of the opening and each sealing surface, the side of the opening is provided to have wedge-shaped cross section. When the side of the opening is embedded between the first sealing portion 126 and the second sealing portion 127, the side of the opening may have a larger sealing matching area with the first sealing surface 129 and the second sealing surface 131.

It can be understood that, FIG. 23 illustrates an exploded schematic structural diagram of a first housing and a light-transmitting panel according to an embodiment of the present disclosure. As shown in FIG. 23, the first top cover component further includes a light-transmitting panel 133. The light-transmitting panel 133 is a plate-like structure made of light-transmitting material. The light-transmitting panel 133 is provided on the second side of the first housing 122. The light-transmitting panel 133 is hermetically matched with the second side of the first housing 122. An area of the light-transmitting panel 133 is larger than an area of the mounting opening, to ensure that the mounting opening can be blocked. The light-transmitting panel 133 forms a sealed housing with the first housing 122 and the second housing 123.

It can be understood that, a side of the second side of the first housing 122 is formed with a round of raised edges 134 surrounding an outer periphery of the light-transmitting panel 133. The shape of the raised edge 134 is the same as that of the light-transmitting panel 133. A height of the raised edge 134 is the same as a thickness of the light-transmitting panel 133. A side of the raised edge 134 away from the first housing 122 and a side of the light-transmitting panel 133 away from the first housing 122 are in a same plane. Providing the raised edge 134 can not only limit the position of the light-transmitting panel 133, but also smooth the surface of the first top cover component, thereby improving the aesthetics of the first top cover component.

It can be understood that, a round of groove 135 is formed on a side of the raised edge 134 towards a center of the first housing 122. The groove 135 is a rectangular groove, and the groove 135 is suitable for receiving colloid for bonding the light-transmitting panel 133 and the first housing 122. By providing the groove 135, more colloid can be filled between the light-transmitting panel 133 and the first housing 122, which improves bonding strength between the light-transmitting panel 133 and the first housing 122 without increasing a total thickness between the light-transmitting panels 133 and the first housing 122.

A specific embodiment of the present disclosure is described below with reference to FIG. 22 to FIG. 25: In FIG. 22 to FIG. 25, the first top cover component includes a first housing 122, a second housing 123, a first seal 124 and a light-transmitting panel 133. The first housing 122 has a rectangular plate structure. The first housing 122 is provided with a mounting opening. The first housing 122 and the first frame body 110 are connected through the flexible member 112. The first housing 122 is switchable between the open state and the closed state. The flexible member 112 is a drawstring. The flexible member 112 is configured to connect the first housing 122 and the first frame body 110, the first housing 122 can be opened at a larger angle to facilitate the installation, maintenance and debugging of the water softening device.

The first housing 122 and the first frame body 110 are both provided with snap slots 113, and two ends of the flexible member 112 are respectively connected in the corresponding snap slots 113 by a snap-fit. A limit block 114 is provided at an end of the flexible member 112 connected to the snap slot 113 by a snap-fit. A width of the snap slot 113 is less than a width of the limit block 114. By connecting the snap slot 113 and the flexible member 112 through a snap-fit, the first housing122 can be conveniently mounted and disassembled.

The second housing 123 is provided on the first side of the first housing 122, the receiving cavity is formed inside the second housing 123, and the receiving cavity is configured to mount the display assembly. The display assembly includes the control circuit board and the display screen, and the control circuit board is electrically connected to the display screen. The size of the mounting opening is less than the size of the opening, and the display screen is embedded in the mounting opening. The side of the second housing 123 towards the first housing 122 is opened. The first side of the first housing 122 is provided with a plurality of fasteners at intervals, and a side of the second housing 123 is provided with a plurality of snap tongues corresponding to the fasteners, and the snap tongues are connected to the fasteners by a snap-fit in one-to-one correspondence. By matching the snap tongues with the fasteners, the installation and disassembly of the second housing 123 can be facilitated. In order to further strengthen the connection between the second housing 123 and the first housing 122, a plurality of screw holes are provided at intervals on the side of the second housing 123. The second housing 123 is connected to the second housing 123 through screws in the screw holes. By using the screws and the fasteners to fix the second housing 123, the second housing 123 and the first seal 124 can be closely attached, thereby improving the sealing performance between the second housing 123 and the first housing 122.

The present disclosure further provides a water softening device. The water softening device includes a machine body and a top cover assembly as described in any of the above embodiments. The machine body is connected to the first frame body. By using the above top cover assembly, the top cover assembly can be opened conveniently, which enhances the user experience and improves the competitiveness of the water softening device.

Finally, it should be noted that, the above embodiments are only used to illustrate the present disclosure, but not to limit the present disclosure. Although the present disclosure has been described in detail with reference to the embodiments, those skilled in the art should understand that various combinations, modifications, or equivalent replacements of the solutions of the present disclosure do not depart from the scope of the solutions of the present disclosure, and should all be covered within the scope of the claims of the present disclosure.

## Claims

1. A flip cover assembly, comprising: a cover body; and a first crank arm, wherein a first end of the first crank arm is connected to an end of the cover body, and a second end of the first crank arm is rotatably connected to a middle frame assembly of a water softener, wherein the cover body is flippable relative to the middle frame assembly through the first crank arm, and a flip angle of the cover body relative to the middle frame assembly is greater than 90°.

2. The flip cover assembly of claim 1, wherein the first crank arm comprises a first long-arm segment and a first short-arm segment, wherein the first long-arm segment is arc-shaped, the first short-arm segment is linear, wherein a first end of the first long-arm segment is connected to an end of the cover body, a second end of the first long-arm segment is connected to a first end of the first short-arm segment, and a second end of the first short-arm segment is rotatably connected to the middle frame assembly, wherein a distance between the second end of the first short-arm segment and the first end of the first long-arm segment is shorter than a distance between the first end of the first short-arm segment and the first end of the first long-arm segment.

3. The flip cover assembly of claim 1 or 2, further comprising a first stop portion connected to the first crank arm, and the first stop portion abuts against or is separated from the middle frame assembly.

4. The flip cover assembly of claim 3, wherein the first stop portion is provided at an outer side of the first crank arm.

5. The flip cover assembly of claim 3, wherein the first crank arm is provided with a plurality of mounting positions arranged in sequence along an extension direction of the first crank arm, wherein the first stop portion is detachably connected to any one of the plurality of mounting positions.

6. The flip cover assembly of any one of claims 1 to 5, further comprising a first damping shaft with an end connected to the second end of the first crank arm, and another end connected to the middle frame assembly.

7. A top cover device, comprising: a middle frame assembly provided with a first through opening; and a flip cover assembly of any of the above claims 1 to 6, wherein the second end of the first crank arm is rotatably connected to the middle frame assembly, and wherein the cover body is flappable relative to the middle frame assembly between a first position at which the first through opening is closed and a second position at which the first through opening is opened.

8. The top cover device of claim 7, wherein the middle frame assembly is provided with an abut portion; when the cover body is in the first position, the first stop portion on the first crank arm is separated from the abut portion, and when the cover body is in the second position, the first stop portion on the first crank arm abuts against the abut portion.

9. The top cover device of claim 7 or 8, further comprising a display cover assembly detachably connected to the middle frame assembly and configured to close or open a second through opening, wherein the middle frame assembly is provided with the second through opening.

10. The top cover device of any one of claims 7 to 9, wherein the middle frame assembly comprises a middle frame and a middle frame decorative ring, wherein the middle frame decorative ring sleeves outside the middle frame.

11. The top cover device of claim 10, wherein a plurality of buckle structures are provided between the middle frame and the middle frame decorative ring, wherein the plurality of buckle structures are arranged sequentially along a circumferential direction of the middle frame; and each of the plurality of buckle structures comprises a buckle head and a buckle slot, wherein the buckle head is buckled in the buckle slot, one of the buckle head and the buckle slot is provided at the middle frame, and another one of the buckle head and the buckle slot is provided at the middle frame decorative ring.

12. The top cover device of claim 10, wherein an outer side of the middle frame is provided with a first guide surface, an inner side of the middle frame decorative ring is provided with a second guide surface, and the first guide surface is matched with the second guide surface.

13. A water softener, comprising: a box body, wherein a receiving cavity is formed inside the box body, and a box opening is formed at a top of the box body communicating with the receiving cavity; and a top cover device of any of the above claims 7 to 12, wherein the middle frame assembly is detachably mounted on the box opening.

14. The water softener of claim 13, further comprising: a resin tank, wherein the resin tank is provided in the receiving cavity, both the first through opening and the second through opening on the middle frame assembly are connected to the receiving cavity respectively, and the second through opening is arranged opposite to the resin tank.

15. A top cover assembly, comprising: a first frame body, provided with a first opening and a first limit portion; and a first top cover component connected to the first frame body and provided with a second limit portion, the first top cover component being switchable between an open state and a closed state, wherein in the closed state, the first top cover component covers the first opening, and the first limit portion is limitedly matched with the second limit portion at a first direction and a second direction in a plane wherein the first top cover component is located; and in the open state, an opening side of the first top cover component is away from the first opening, and the first limit portion is separated from the second limit portion.

16. The top cover assembly of claim 15, wherein the first limit portion comprises a first limit hole, the second limit portion comprises a limit block and/or a snap tongue embedded in the corresponding first limit hole in the closed state.

17. The top cover assembly of claim 15 or 16, wherein the first top cover component is provided with a third limit portion, and the first frame is provided with a fourth limit portion corresponding to the third limit portion, wherein in the closed state, the first limit portion is limitedly matched with the second limit portion in a direction perpendicular to the plane wherein the first top cover component is located.

18. The top cover assembly of claim 17, wherein the third limit portion is located on a side of the first top cover component opposite to the opening side, the third limit portion comprises a hook-shaped structure, and the fourth limit portion comprises a second limit hole, wherein in the closed state, the hook-shaped structure is embedded in the second limit hole and connected with an inner wall of the second limit hole by a snap-fit.

19. The top cover assembly of any one of claims 15-18, further comprising: a second top cover component detachably connected to the first frame body, the first frame provided with a second opening located on a side of the first opening, and the second top cover component being switchable between a closed position and an open position, wherein in the closed position, the second top cover component covers the second opening, and in the open position, the second top cover component is away from the second opening.

20. The top cover assembly of claim 19, wherein the second top cover component is connected to the first frame body through a crank arm component, and a flip angle of the second top cover component relative to the first frame body is greater than 90°.

21. The top cover assembly of claim 19, wherein a side of the first top cover component opposite to the opening side is connected to the first frame body through a flexible member, wherein in the open state, the first top cover component is located above the second top cover component, and an included angle between the first top cover component and the second top cover component is less than a predetermined angle.

22. The top cover assembly of claim 21, wherein the flexible member is detachably connected to at least one of the first frame body or the first top cover component.

23. The top cover assembly of claim 21, wherein a limit portion is formed on a side of the second top cover component away from the first opening or a side of the first frame body away from the first opening, wherein in the open state, the first top cover component is located above the second top cover component, and is limitedly matched with the limit portion.

24. The top cover assembly of any one of claims 15-23, further comprising: an ejector rod component switchable between an extended state and a retracted state, wherein in the retracted state, the first top cover component covers the first opening; and in the extended state, the ejector rod component abuts against the first frame body or the first top cover component, and an opening gap exists between the opening side of the first top cover component and the first frame body.

25. The top cover assembly of claim 24, wherein the ejector rod component comprises: a first elastic member, wherein the first frame body or the first top cover component is formed with a first mounting hole, the first elastic member is provided inside the first mounting hole, and a first end of the first elastic member abuts against a bottom wall of the first mounting hole; and an ejector rod provided inside the first mounting hole and abutting against a second end of the first elastic member, wherein in the retracted state, the ejector rod is retracted into the first mounting hole, and the first elastic member is in a first compressed state; and in the extended state, the ejector rod extends from the first mounting hole and abuts against the first frame body, and the first elastic member is in a second compressed state.

26. A water softening device, comprising a machine body and a top cover assembly of any one of claims 15 to 25, wherein the machine body is connected to the first frame body.
